(19) Europäisches Patentamt
European Patent Office
Office européen des brevets

(11) **EP 3 449 156 B1**

(12) **FASCICULE DE BREVET EUROPEEN**

(45) Date de publication et mention
de la délivrance du brevet:
**19.08.2020 Bulletin 2020/34**

(51) Int Cl.:
*F16H 1/32* *(2006.01)* *F16H 1/28* *(2006.01)*
*B62D 5/04* *(2006.01)*

(21) Numéro de dépôt: **17725658.3**

(22) Date de dépôt: **21.04.2017**

(86) Numéro de dépôt international:
**PCT/FR2017/050943**

(87) Numéro de publication internationale:
**WO 2017/187055 (02.11.2017 Gazette 2017/44)**

(54) **RÉDUCTEUR CYCLOÏDAL AVEC RATTRAPAGE AUTOMATIQUE DE JEU ET SYSTÈME DE DIRECTION ASSISTÉE POURVU D'UN TEL RÉDUCTEUR**

ZYKLOIDISCHES UNTERSETZUNGSGETRIEBE MIT RÜCKSCHLAGSELBSTEINSTELLUNG UND SERVOLENKSYSTEM MIT SOLCH EINEM UNTERSETZUNGSGETRIEBE

CYCLOIDAL REDUCER WITH BACKLASH SELF-ADJUSTMENT AND POWER STEERING SYSTEM WITH SUCH A REDUCER

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **25.04.2016 FR 1653628**

(43) Date de publication de la demande:
**06.03.2019 Bulletin 2019/10**

(73) Titulaire: **JTEKT Europe**
**69540 Irigny (FR)**

(72) Inventeur: **REY, Laurent**
**69100 VILLEURBANNE (FR)**

(74) Mandataire: **Chevalier, Renaud Philippe et al**
**Cabinet Germain & Maureau**
**BP 6153**
**69466 Lyon Cedex 06 (FR)**

(56) Documents cités:
**EP-A1- 0 474 897 EP-A1- 0 931 714**
**EP-A2- 0 087 743 FR-A- 1 351 031**
**FR-A1- 3 001 518 GB-A- 999 326**
**US-A1- 2015 211 392**

**Description**

La présente invention concerne le domaine général des réducteurs à engrenage, et plus particulièrement le domaine des réducteurs à engrenage cycloïdal (dits plus simplement « réducteurs cycloïdaux »), qui assurent une transmission de mouvement entre un arbre d'entrée et un arbre de sortie afin d'opérer une réduction de la vitesse de rotation au profit d'une augmentation du couple transmis.

L'invention concerne plus spécifiquement l'application de tels réducteurs ) à un système de direction assistée pour véhicule. Le document EP 0 087 743 A2 montre un réducteur selon le préambule de la revendication 1.

On connaît déjà, notamment par le brevet EP-0 086 393, un réducteur cycloïdal au sein duquel un arbre d'entrée entraîne, au moyen d'un organe d'excentrique, tel qu'une came, un disque d'entrée qui est pourvu d'une denture cycloïdale et qui engrène sur une couronne d'entrée comprenant une série de dents formées par des rouleaux implantés en cercle dans ladite couronne d'entrée. Ledit réducteur comprend également un disque de sortie, qui est entraîné en rotation par le disque d'entrée et qui est lui aussi pourvu d'une denture cycloïdale qui engrène sur une couronne de sortie, solidaire d'un arbre de sortie, et dont la denture est formée par une série de rouleaux.

Un inconvénient de tels réducteurs à engrenage cycloïdal tient à la présence d'un jeu d'engrènement (« backlash ») entre la denture de chaque disque cycloïdal et la denture de la couronne correspondante, ledit jeu d'engrènement pouvant être à l'origine de chocs et de bruits de fonctionnement, en particulier lorsque l'on inverse le sens de rotation dudit réducteur.

Un tel inconvénient peut même faire obstacle à l'utilisation d'un tel réducteur au sein de mécanismes qui sont, par destination, soumis à de fréquentes inversions de leur sens de rotation, tels que cela est le cas pour les mécanismes de direction assistée dont on modifie le sens de rotation à chaque inversion de braquage, c'est-à-dire chaque fois que le conducteur change le sens dans lequel il manœuvre le volant de conduite.

Pour pallier cet inconvénient et rattraper le jeu radial entre le disque et la couronne, le brevet susmentionné prévoit certes un mécanisme de réglage à excentrique, qui permet de régler individuellement, puis de bloquer par une vis de blocage, la position de l'axe de chaque rouleau de la couronne, et ainsi d'ajuster la pression de chaque rouleau de la couronne contre la denture du disque cycloïdal correspondant.

Cependant, bien qu'il permette effectivement d'obtenir un rattrapage de jeu, un tel mécanisme de réglage présente encore de nombreux inconvénients.

Tout d'abord, la fabrication du réducteur cycloïdal correspondant nécessite un nombre très élevé de pièces, incluant notamment les rouleaux, axes de rouleaux, noix d'excentrique recevant les axes de rouleaux, vis de blocage, etc., et impose en outre, pour certaines desdites pièces, des tolérances d'ajustement particulièrement précises.

La fabrication, l'assemblage, puis le réglage d'un tel réducteur sont donc particulièrement longs et coûteux.

En outre, il est difficile d'obtenir une pré-charge homogène d'un rouleau à l'autre, si bien que le mécanisme de réglage peut être parfois trop lâche, soit dès l'origine soit parce qu'il se dérègle au fil du temps, ou bien au contraire parfois trop serré.

Dans le premier cas, une pré-charge trop faible ne permet pas d'obtenir un rattrapage satisfaisant et durable du jeu d'engrènement, tandis que dans l'autre cas, une pré-charge trop forte tend à provoquer une usure prématurée voire un blocage ou une destruction du réducteur.

Pour l'ensemble de ces raisons, les réducteurs cycloïdaux connus sont en pratique inadaptés, et de fait écartés, dans un certain nombre d'applications, notamment lorsque l'on souhaite concrètement assurer une transmission de puissance et de mouvement au sein d'un système de direction assistée.

Les objets assignés à l'invention visent par conséquent à remédier aux inconvénients susmentionnés et à proposer un nouveau type de réducteur cycloïdal simplifié, léger et compact, qui soit facile et peu onéreux à fabriquer, et qui présente peu de jeu d'engrènement, tout en ayant une durée de vie et une fiabilité accrues.

Les objets assignés à l'invention sont atteints au moyen d'un réducteur à engrenage cycloïdal comprenant un arbre d'entrée, monté en rotation dans un carter de réducteur selon un axe dit « axe principal » (ZZ'), un organe d'excentrique porté par l'arbre d'entrée et entraîné en rotation par ce dernier, au moins un disque cycloïdal qui est monté en rotation sur ledit organe d'excentrique et qui est pourvu d'une denture cycloïdale, au moins une couronne pourvue d'une denture réceptrice sur laquelle engrène la denture cycloïdale du disque cycloïdal, et un arbre de sortie, distinct de l'arbre d'entrée, qui est agencé de manière à être entraîné en rotation par le disque cycloïdal, ledit réducteur étant caractérisé en ce qu'il comprend un dispositif de suspension qui est agencé pour rappeler élastiquement la denture cycloïdale du disque cycloïdal et la denture réceptrice de la couronne l'une contre l'autre, de manière à assurer un rattrapage automatique de jeu d'engrènement entre ledit disque cycloïdal et ladite couronne selon au moins une composante radiale à l'axe principal (ZZ').

Avantageusement, la mise en œuvre d'un dispositif de suspension selon l'invention, capable de se déformer élastiquement pour accommoder les éventuels écarts radiaux entre la denture du disque cycloïdal et la denture réceptrice de la couronne, permet de presser automatiquement, en permanence, la portion de la denture du disque cycloïdal qui engrène sur la couronne contre la portion correspondante de la denture réceptrice de la couronne.

**EP 3 449 156 B1**

Le réducteur cycloïdal selon l'invention possède donc une excellente capacité à accommoder élastiquement, et par conséquent de façon automatique, souple et sans heurts, les variations de la position radiale de la denture du disque cycloïdal par rapport à la position radiale de la denture réceptrice correspondante de la couronne, que ces variations soient causées par des tolérances de fabrication du disque et de la couronne, par des tolérances d'assemblage des différentes pièces constitutives du réducteur, ou bien encore par une usure du réducteur.

A ce titre, on notera que, de façon particulièrement avantageuse, le dispositif de suspension selon l'invention peut ainsi remplir deux fonctions.

La première fonction consiste à garantir, lors de l'opération d'assemblage du réducteur, un jeu d'assemblage qui soit suffisant pour permettre l'insertion axiale du disque cycloïdal, et plus globalement de l'arbre d'entrée, au sein de la couronne, sans interférence, et ce quelles que soient par ailleurs les tolérances de fabrication respectives de la couronne et du disque cycloïdal.

En effet, le débattement radial qui est offert par la course élastique du dispositif de suspension (c'est-à-dire la plage sur laquelle ledit dispositif de suspension est libre de se déformer élastiquement) permet d'ajuster radialement la position du disque cycloïdal par rapport à la couronne, et plus particulièrement d'écarter (de décoller) radialement au besoin la denture du disque de la denture réceptrice correspondante de la couronne, en repoussant par exemple temporairement (le temps nécessaire à l'engagement axial du disque dans la couronne) le disque à l'encontre du dispositif de suspension, de sorte à créer ou à préserver provisoirement entre le disque et la couronne un jeu radial d'assemblage qui permet de glisser l'arbre d'entrée et le disque dans la couronne avec un guidage relativement précis, mais sans heurt ni blocage.

La seconde fonction consiste en une fonction de rattrapage automatique de jeu d'engrènement, après assemblage et lors du fonctionnement normal du réducteur, la course élastique offerte par ledit dispositif de suspension permettant en effet de compenser automatiquement et en douceur, sans exercer de contraintes excessives sur les dentures, le jeu d'assemblage statique initial, puis les variations dynamiques affectant les cercles primitifs d'engrenage du disque et de la couronne (c'est-à-dire les variations dynamiques d'entraxe entre la denture du disque et la denture de la couronne) qui sont dues aux tolérances de fabrication et d'assemblage ou bien à l'usure progressive du réducteur.

L'invention permet donc de faciliter l'assemblage du réducteur cycloïdal, puis d'améliorer la qualité de l'engrènement ainsi que la durée de vie dudit réducteur.

D'autres objets, caractéristiques et avantages de l'invention apparaîtront plus en détail à la lecture de la description qui suit, ainsi qu'à l'aide des dessins annexés, fournis à titre purement illustratif et non limitatif, parmi lesquels :

La figure 1 illustre, selon une vue en coupe longitudinale le long de l'axe principal (ZZ'), un réducteur cycloïdal à deux étages selon l'invention, et une implantation possible dudit réducteur au sein d'un système de direction assistée.

La figure 2 illustre, sous forme d'un schéma cinématique, le réducteur de la figure 1.

La figure 3 illustre, selon une vue en perspective éclatée, le réducteur des figures 1 et 2.

La figure 4 illustre, selon une vue en perspective éclatée, le détail des étages de réduction cycloïdaux du réducteur des figures 1 à 3.

La figure 5 illustre, selon une vue en perspective schématique, le principe de fonctionnement d'un réducteur cycloïdal comprenant un seul étage de réduction.

Les figures 6 et 7 illustrent, selon une vue en coupe le long de l'axe principal (ZZ'), et selon une vue en projection de face, le détail d'une première variante de réalisation de réducteur selon l'invention, avec un dispositif de suspension interposé entre l'organe d'excentrique et le palier d'excentrique supportant le disque cycloïdal.

La figure 8 illustre, selon une vue en perspective, le dispositif de suspension utilisé au sein de la première variante de réducteur des figures 6 et 7.

Les figures 9 et 10 illustrent, selon des vues en projection dans un plan normal à l'axe principal (ZZ'), respectivement depuis l'arbre d'entrée et depuis l'arbre de sortie, un sous-ensemble de réducteur à deux étages de réduction, comprenant deux disques cycloïdaux suspendus dans leur ensemble par un même dispositif de suspension interposé entre le palier d'excentrique et lesdits disques, tel que cela est le cas au sein des différentes variantes de réalisation des figures 11 à 18.

La figure 11 illustre, selon une vue en coupe le long de l'axe principal (ZZ'), le détail d'une seconde variante de réalisation de réducteur selon l'invention.

La figure 12 illustre, selon une vue en perspective, le dispositif de suspension utilisé au sein de la seconde variante de réducteur de la figure 11, et comprenant un organe ressort, ici un ressort à lame en C, associé à un organe amortisseur, ici un joint torique.

La figure 13 illustre, selon une vue en coupe le long de l'axe principal (ZZ'), le détail d'une troisième variante de réalisation de réducteur selon l'invention.

La figure 14 illustre, selon une vue en perspective, le dispositif de suspension utilisé au sein de la troisième variante de réducteur de la figure 13, comprenant un ressort, ici un ressort à lame ondulé, placé axialement entre deux organes amortisseurs, ici des joints toriques.

La figure 15 illustre, selon une vue en coupe le long de l'axe principal (ZZ'), le détail d'une quatrième variante de réalisation de réducteur selon l'invention.

La figure 16 illustre, selon une vue en perspective, le dispositif de suspension utilisé au sein de la quatrième variante de réducteur de la figure 15, comprenant un ressort, ici un ressort à lame ondulé, placé axialement entre deux organes amortisseurs, ici formés par des joints à quatre lobes.

La figure 17 illustre, selon une vue en coupe le long de l'axe principal (ZZ'), le détail d'une cinquième variante de réalisation de réducteur selon l'invention.

La figure 18 illustre, selon une vue en perspective, le dispositif de suspension utilisé au sein de la cinquième variante de réducteur de la figure 17, et comprenant deux ressorts, ici des ressorts à lame ondulés, placés axialement de part et d'autre d'un organe amortisseur, ici formé par un joint torique.

Les figures 19 et 20 illustrent, selon des vues en perspective, le détail d'un sous-ensemble de disques comprenant deux disques cycloïdaux accouplés selon une liaison de type joint de Oldham par l'intermédiaire d'une rondelle d'accouplement, tel que mis en œuvre au sein des variantes de réalisation des figures 21 et 23.

La figure 21 illustre, selon une vue en coupe le long de l'axe principal (ZZ'), le détail d'une sixième variante de réalisation de réducteur selon l'invention, comprenant deux disques cycloïdaux couplés par un joint de Oldham.

La figure 22 illustre, selon une vue en perspective, le dispositif de suspension utilisé au sein de la sixième variante de réducteur de la figure 21, comprenant un premier ressort, ici un ressort à lame ondulé, assurant la suspension du premier disque, un second ressort, ici un ressort hélicoïdal annulaire, assurant la suspension du second disque, et un organe amortisseur, ici un joint torique, interposé axialement entre les deux ressorts, en vis-à-vis de la rondelle d'accouplement.

La figure 23 illustre, selon une vue en coupe le long de l'axe principal (ZZ'), le détail d'une septième variante de réalisation de réducteur selon l'invention, comprenant deux disques cycloïdaux couplés par un joint de Oldham.

La figure 24 illustre, selon une vue en perspective, le dispositif de suspension utilisé au sein de la septième variante de réducteur de la figure 21, comprenant un premier ressort, ici un ressort à lame ondulé, assurant la suspension du premier disque, un second ressort, ici formé par une paire de ressorts à lame en C opposés dos à dos, qui assure la suspension du second disque, et un organe amortisseur, ici un joint torique, interposé axialement entre les deux ressorts, en vis-à-vis de la rondelle d'accouplement.

La présente invention concerne un réducteur à engrenage cycloïdal 1, dit aussi « réducteur cycloïdal » 1 (ci-après « réducteur » 1).

Un tel réducteur 1 permet avantageusement une transmission et une conversion de mouvement et/ou d'effort, et donc une transmission et une conversion de puissance mécanique, entre un arbre d'entrée 2, qui reçoit la puissance motrice à transmettre, et un arbre de sortie 3, qui transmet ladite puissance motrice en aval du réducteur 1.

Le terme « réducteur » 1 peut désigner ici indifféremment soit un mécanisme effectivement destiné à opérer une réduction, c'est-à-dire utilisé pour réduire la vitesse et augmenter le couple transmis, le réducteur 1 étant alors agencé selon une configuration dite « configuration directe » de telle sorte que l'arbre de sortie 3 tourne à une vitesse de rotation de sortie $w3$ moindre que la vitesse de rotation d'entrée $w2$ de l'arbre d'entrée 2 mais en développant un couple de sortie $T3$ supérieur au couple d'entrée $T2$ exercé sur ledit arbre d'entrée 2, soit un mécanisme multiplicateur, le réducteur 1 étant alors agencé selon une configuration dite « configuration inverse » de telle sorte que l'arbre de sortie 3 tourne plus vite que l'arbre d'entrée 2, mais en développant un couple $T3$ inférieur à celui $T2$ fourni à l'arbre d'entrée 2.

De préférence, le réducteur 1 sera un mécanisme réversible, pouvant adopter sélectivement soit la configuration directe, soit la configuration inverse, simplement en permutant les rôles de l'arbre d'entrée 2 et de l'arbre de sortie 3.

Par simple commodité de description, on considérera dans ce qui suit que le réducteur 1 se trouve en configuration directe, et assume une fonction de réduction de vitesse de rotation entre l'arbre d'entrée 2 et l'arbre de sortie 3.

Par ailleurs le réducteur 1 est de préférence à double sens de fonctionnement, en ceci qu'il peut transmettre aussi bien un mouvement de rotation en sens horaire que, au contraire, un mouvement de rotation en sens anti-horaire.

Bien entendu, le réducteur 1 selon l'invention pourra être couplé à tout système mécanique de transmission de mouvement (et d'effort), et plus particulièrement être utilisé en sortie de tout type de machine tournante, telle que moteur, turbine, éolienne ou hydrolienne, ou encore en association avec tout type de mécanisme rotatif, à entraînement motorisé ou bien manuel, du genre pédalier, treuil (notamment treuil à manivelle), mouvement d'horlogerie (remontoir automatique), etc.

Toutefois, selon une variante d'application particulièrement préférentielle, le réducteur 1 selon l'invention sera utilisé au sein d'un système de direction assistée 4, destiné à un véhicule, préférentiellement à un véhicule automobile, et sera de préférence configuré pour assurer une fonction de réduction au sein dudit système de direction assistée 4.

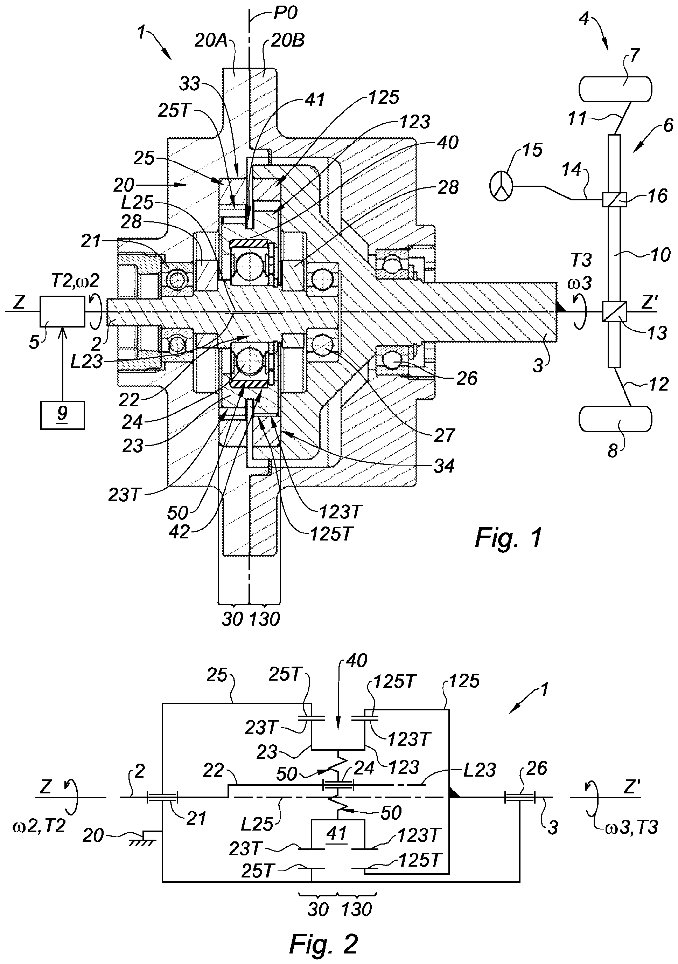

L'invention porte donc en tant que telle, ainsi que cela est illustré sur la figure 1, sur un système de direction assistée 4, qui comprend un moteur d'assistance 5, un mécanisme de direction 6 qui permet de modifier l'angle de braquage d'un ou plusieurs organes directionnels 7, 8, tels qu'une ou plusieurs roues directrices 7, 8, ledit système de direction assistée 4 comportant un réducteur cycloïdal 1 selon l'une quelconque des variantes de l'invention pour assurer une transmission mécanique entre ledit moteur d'assistance 5, ici raccordé à l'arbre d'entrée 2, et le mécanisme de direction 6, ici raccordé à l'arbre de sortie 3.

Le moteur d'assistance 5 est de préférence un moteur électrique à double sens de rotation, qui est piloté électroniquement, en fonction de lois d'assistance prédéterminées, par un calculateur 9 embarqué sur le véhicule.

De façon connue en soi, le mécanisme de direction 6 peut comporter une crémaillère 10, qui est montée en translation dans un carter de direction fixé au châssis du véhicule, et qui est raccordée aux roues directrices 7, 8 par des biellettes de direction 11, 12.

L'arbre de sortie 3 du réducteur 1 peut alors avantageusement être raccordé à un premier pignon d'entraînement 13 qui engrène sur ladite crémaillère 10.

Le mécanisme de direction 6 comprend de préférence également une colonne de direction 14 qui porte un volant de conduite 15 sur lequel le conducteur agit pour choisir l'angle de braquage, et donc le cap du véhicule.

Selon une variante de réalisation préférentielle, le mécanisme de direction 6 est un mécanisme « à double pignon », au sein duquel la colonne de direction 14 engrène sur la crémaillère 10 au moyen d'un second pignon d'entraînement 16, distinct et distant du premier pignon d'entraînement 13, tel que cela est illustré sur la figure 1.

On notera que le descriptif fourni en référence préférentielle à la figure 1, et plus particulièrement la configuration d'utilisation du réducteur 1 au sein d'un système de direction assistée 4, reste bien entendu applicable *mutatis mutandis* à toutes les variantes de réalisation de réducteurs 1 conformes à l'invention.

Selon l'invention, et tel que cela est illustré sur la figure 1, le réducteur cycloïdal 1 comprend un arbre d'entrée 2 qui est monté en rotation dans un carter de réducteur 20 selon un axe dit « axe principal » (ZZ').

L'arbre d'entrée 2 est à cet effet porté, et guidé en rotation, par au moins un palier d'entrée 21, tel qu'un roulement à billes, logé dans le carter de réducteur 20.

Le réducteur 1 comprend également un organe d'excentrique 22, tel qu'une came, qui est porté par l'arbre d'entrée 2 et entraîné en rotation par ledit arbre d'entrée 2.

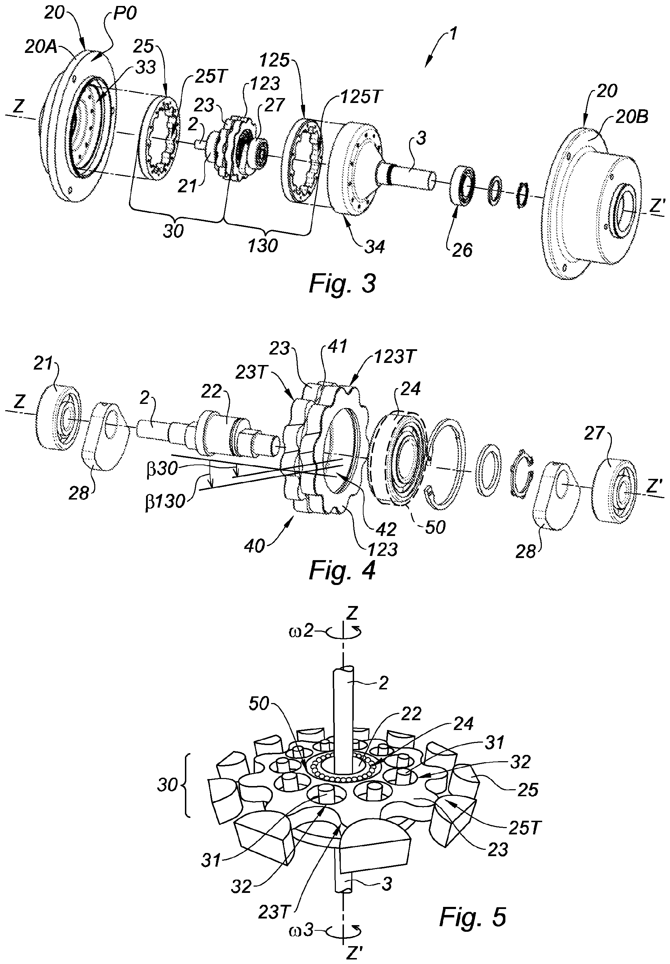

L'organe d'excentrique 22 peut être formé par une pièce séparée, du genre came, qui est rapportée et fixée sur l'arbre d'entrée 2, ou bien, de préférence, et tel que cela est illustré sur les figures 1 et 4, ledit organe d'excentrique 22 peut être formé d'un seul tenant avec l'arbre d'entrée 2.

Le réducteur 1 comprend en outre au moins un disque cycloïdal 23 qui est monté en rotation sur l'organe d'excentrique 22, au moyen d'un palier d'excentrique 24, tel qu'un roulement à billes, ledit disque cycloïdal 23 étant pourvu, ici sur son périmètre radialement externe, d'une denture cycloïdale 23T.

On notera L23 l'axe central dudit disque cycloïdal 23.

Ledit axe central L23 est, de préférence, parallèle à l'axe principal (ZZ').

La denture cycloïdale 23T présente, comme son nom l'indique, sensiblement voire exactement un profil de cycloïde, ladite cycloïde correspondant mathématiquement à la trajectoire suivie par un point fictif situé sur un cercle générateur fictif qui roule sans glisser sur le périmètre radialement externe d'un cercle de base centré sur l'axe central L23, ledit cercle de base correspondant ici au cercle de fond de denture du disque cycloïdal 23.

En l'espèce, les lobes formant la denture 23T du disque 23 font ainsi saillie radialement selon une direction centrifuge par rapport à l'axe central L23 et par rapport au cercle de fond de denture du disque 23.

Le réducteur 1 comprend également au moins une couronne 25 qui est pourvue d'une denture réceptrice 25T sur laquelle engrène la denture cycloïdale 23T du disque cycloïdal 23.

La denture réceptrice 25T est avantageusement également cycloïdale, de forme conjuguée à la denture 23T du disque 23, et possède un même module (d'engrenage) que la denture 23T du disque 23, de sorte à permettre l'engrènement.

Ladite denture réceptrice 25 est générée sur le périmètre radialement interne de la couronne 25, en saillie radiale centripète vers l'axe central L25 de la couronne.

L'axe central L25 de la couronne 25 est de préférence confondu avec l'axe principal (ZZ'), de sorte que la couronne 25 est de préférence coaxiale à l'arbre d'entrée 2.

Bien entendu, les paramètres servant à définir, sous formes de courbes paramétrées, les profils cycloïdaux des dentures 23T, 25T selon l'invention, tels que le diamètre du cercle primitif, l'excentricité, ou le diamètre du cercle de fond de denture de la couronne pourront être ajustés librement de manière à adapter lesdits profils de denture, par rapport à un profil théorique rigoureusement cycloïdal, afin, par exemple, de minimiser les contraintes exercées sur les dents et à optimiser le jeu radial (théorique) censé permettre à la fois un assemblage facile de l'engrenage cycloïdal et un engrènement en douceur.

Pour assurer les appuis nécessaires à la transmission de mouvement entre l'arbre d'entrée 2 et le disque cycloïdal 23, la couronne 25 est fixée dans le carter de réducteur 20, par exemple par des vis de fixation, de manière à être bloquée au moins en rotation autour de l'axe principal (ZZ'), et de préférence de manière à être totalement solidaire du carter de réducteur 20 (tous les degrés de liberté entre la couronne 25 et le carter de réducteur 20, en rotation et en translation, étant alors supprimés).

Ainsi, la mise en rotation w2 de l'arbre d'entrée 2 provoque une mise en rotation du disque 23, autour de son axe central L23 (qui coïncide à chaque instant avec l'axe de l'organe d'excentrique 22), sous l'action combinée du mouvement de l'organe d'excentrique 22, actionné par la rotation de l'arbre d'entrée 2, et de la coopération entre la denture cycloïdale 23T dudit disque 23 et la denture cycloïdale réceptrice 25T conjuguée de la couronne 25, qui provoque et guide un roulement sans glissement (ou quasiment sans glissement) du disque cycloïdal 23 sur la couronne 25.

Le réducteur 1 comprend enfin un arbre de sortie 3, distinct de l'arbre d'entrée 2, et qui est agencé de manière à être entraîné en rotation par le disque cycloïdal 23.

Bien qu'il ne soit pas exclu que l'arbre de sortie 3 soit incliné par rapport à l'arbre d'entrée 2, voire perpendiculaire à celui-ci, et forme ainsi un renvoi d'angle, l'arbre de sortie 3 est de préférence parallèle, et plus particulièrement coaxial, à l'arbre d'entrée 2, tel que cela est visible sur les figures 1 et 2.

L'arbre de sortie 3 sera avantageusement soutenu, et guidé en rotation, par au moins un palier de sortie 26, tel qu'un roulement à billes, logé dans le carter de réducteur 20.

En outre, de préférence, l'arbre d'entrée 2 s'articulera en liaison pivot, voire en liaison rotule, avec l'arbre de sortie 3, au moyen d'un palier de liaison 27, tel qu'un roulement à billes, ici logé dans le moyeu central de l'arbre de sortie 3, et coaxial au palier d'entrée 21, tel que cela est illustré sur la figure 1.

Par ailleurs, tel que cela est bien visible sur la figure 4, l'arbre d'entrée 2 pourra comprendre une ou des masselottes 28 agencées pour compenser le déséquilibre de masse causé par l'organe d'excentrique 22 et par le battement radial du disque cycloïdal 23 qui est induit par la mise en rotation dudit organe d'excentrique 22.

Grâce à ces masselottes 28, on évitera de générer des vibrations ou de provoquer une usure prématurée du réducteur 1, et plus particulièrement des paliers 21, 24, 26, 27.

Pour faciliter le montage du réducteur 1, le carter de réducteur 20 sera de préférence subdivisé, selon un plan de joint P0 transverse à l'axe principal (ZZ'), en au moins une première portion de carter 20A (amont), portant ici le palier d'entrée 21 et l'arbre d'entrée 2, et une seconde portion de carter 20B (aval) portant le palier de sortie 26 et l'arbre de sortie 3, tel que cela est visible sur les figures 1 et 3.

Selon l'invention, et tel que cela est bien visible sur les figures 1, 2, 6, 8, 11 à 18 et 21 à 24, le réducteur comprend un dispositif de suspension 50 qui est agencé pour rappeler élastiquement la denture cycloïdale 23T du disque cycloïdal 23 et la denture réceptrice 25T de la couronne 25 l'une contre l'autre, de manière à assurer un rattrapage automatique de jeu d'engrènement entre ledit disque cycloïdal 23 et ladite couronne 25 selon au moins une composante radiale à l'axe principal (ZZ').

Par « radiale », on désigne une direction ou une dimension considérée perpendiculairement à l'axe considéré, ici plus préférentiellement perpendiculaire à l'axe principal (ZZ'), tandis que par « axiale », on désigne une direction ou une dimension considérée parallèlement audit axe considéré, et donc en particulier parallèle à l'axe principal (ZZ'), voire confondue avec ledit axe considéré.

Avantageusement, le dispositif de suspension 50 presse élastiquement, et en permanence, du fait de sa déformation élastique, et au moins selon une composante radiale à l'axe principal (ZZ') (et donc selon au moins une composante radiale aux axes centraux respectifs L23, L25 du disque 23 et de la couronne 25), la denture 23T cycloïdale du disque 23 contre la denture 25T cycloïdale de la couronne 25, et réciproquement, ce qui permet d'assurer en permanence un contact entre les deux dentures 23T, 25T, dans la zone d'engrènement où lesdites dentures 23T, 25T engrènent l'une avec l'autre.

Le réducteur 1 présente par conséquent un fonctionnement doux, sans saccades, ni chocs, et ce notamment lors des inversions de son sens de rotation.

Dans le cas particulier d'une application à un dispositif de direction assistée 4, on améliore ainsi considérablement le confort de conduite.

En outre, comme indiqué plus haut, le dispositif de suspension 50 permet avantageusement de créer, lors de l'opération d'assemblage du réducteur, et par compression radiale dudit dispositif de suspension 50, un jeu radial d'assemblage approprié entre le disque 23 et la couronne 25, jeu radial qui est nécessaire (et suffisant) pour pouvoir insérer axialement, sensiblement par translation selon l'axe principal (ZZ'), l'arbre d'entrée 2 et le disque 23 à travers la couronne 25 (préalablement) fixée au carter de réducteur 20, sans endommager le disque et la couronne, et sans coincer le disque 23 dans la couronne 25, et ce quelles que soient les tolérances de fabrication du disque 23 et de la couronne 25, et plus particulièrement quelles que soient les tolérances de fabrication (de taillage) des dentures 23T, 25T.

La présence d'un organe de suspension 50 selon l'invention permettant d'accommoder lesdites tolérances de fabrication et de créer provisoirement, malgré ces tolérances, le jeu d'assemblage nécessaire, le montage du réducteur 1 s'en trouve donc grandement facilité.

Avantageusement, le caractère élastique du dispositif de suspension 50 permet ensuite de rattraper automatiquement le jeu d'engrènement et d'ajuster automatiquement la pression d'une denture 23T sur l'autre 25T, sans qu'il soit nécessaire de procéder à un réglage contraignant lors de l'assemblage.

On notera de surcroît que, de préférence, le dispositif de suspension 50 est agencé de manière à agir collectivement sur plusieurs dents, et de préférence sur la totalité des dents 23T du disque 23, respectivement des dents 25T de la couronne 25, et non pas seulement individuellement sur une ou plusieurs dents distinctes.

En d'autres termes, la déformation élastique du dispositif de suspension 50 permet de préférence de déplacer solidairement, simultanément, plusieurs dents 23T du disque, et de préférence la totalité des dents 23T du disque 23, par rapport aux dents 25T de la couronne (ou inversement), selon un même mouvement d'ensemble, typiquement en déplaçant unitairement ledit disque 23 dans son entier, et plus particulièrement en déplaçant unitairement ledit disque 23 dans son entier selon un même mouvement radial d'ensemble.

Ainsi, un même dispositif de suspension 50 centralisé et compact permet avantageusement de rattraper le jeu d'engrènement quelles que soient les dents 23T, 25T en prise, ce qui permet de simplifier et d'alléger le réducteur 1.

On notera également que, dans l'absolu, le dispositif de suspension 50, chargé de rappeler la denture 23T du disque et la denture 25T de la couronne l'une contre l'autre, 50 pourrait être agencé selon plusieurs configurations.

Selon une première configuration, dite « configuration à disque mobile suspendu », le dispositif de suspension 50 est configuré pour pouvoir déplacer élastiquement, au moins selon une composante radiale, la denture 23T du disque, et plus globalement le disque 23 dans son ensemble, relativement à la couronne 25, à l'arbre d'entrée 2, et au carter de réducteur 20, c'est-à-dire de manière à pouvoir déplacer radialement l'axe central L23 du disque par rapport à l'axe de l'organe d'excentrique 22, de manière à presser dynamiquement, et selon une direction de rappel (et de contrainte élastique) radiale centrifuge, la denture 23T (radialement externe) du disque vers et contre la denture 25T (radialement interne) de la couronne.

Le dispositif de suspension 50 tend alors à chasser le disque 23 radialement vers l'extérieur, de manière à déporter radialement et élastiquement ledit disque 23 en direction de la couronne 25, dans le secteur angulaire couvert par la zone d'engrènement, et ainsi appuyer la denture 23T du disque 23 contre celle 25T de la couronne 25.

A l'inverse, selon une seconde configuration, dite « configuration à couronne mobile suspendue », le dispositif de suspension 50 pourrait être configuré de manière à pouvoir déplacer élastiquement, au moins selon une composante radiale, la denture 25T de la couronne 25, et plus globalement la couronne 25 dans son ensemble, relativement au disque 23, à l'arbre d'entrée 2, et au carter de réducteur 20, c'est-à-dire de manière à pouvoir déplacer radialement l'axe central L25 de la couronne par rapport à l'axe principal (ZZ'), de manière à presser dynamiquement, et selon une direction de rappel (et de contrainte élastique) radiale centripète, la denture 25T (radialement interne) de la couronne 25 vers et contre la denture 23T (radialement externe) du disque 23.

En variante, on pourrait même envisager de combiner ces deux configurations au sein d'un même réducteur 1, le disque 23 et la couronne 25 étant chacun suspendu l'un à l'encontre de l'autre par un dispositif de suspension 50.

On notera toutefois que la couronne 25 doit pouvoir opposer au disque 23 un couple résistant, de sorte à provoquer la rotation cycloïdale du disque 23 et la transmission d'un couple T3 à l'arbre de sortie 3.

Si l'on optait pour la configuration à couronne mobile suspendue, il faudrait par conséquent interposer radialement le dispositif de suspension 50 entre la couronne 25 et le support recevant ladite couronne 25 (ici la portion amont 20A du carter de réducteur 20), et prévoir une liaison de ladite couronne 25 avec son support qui autorise une mobilité radiale de ladite couronne 25 par rapport audit support, sous l'action de rappel centripète exercée par le dispositif de suspension 50, tout en bloquant sélectivement la rotation de ladite couronne 25 autour de son axe L25 par rapport audit support.

Ceci pourrait éventuellement compliquer légèrement l'usinage du support (carter de réducteur 20) ou la fabrication du réducteur 1, voire restreindre la plage angulaire de directions radiales effectivement disponibles pour le rattrapage de jeu, autour de l'axe principal (ZZ').

C'est pourquoi, de façon préférentielle, on privilégiera la configuration à disque 23 mobile suspendu, tandis que la couronne 25 sera solidairement fixée à son support, sans possibilité de mouvement élastique, notamment sans possibilité de mouvement radial, par rapport audit support.

A cet effet, et tel que cela est illustré sur les figures 1, 2, 6, 8, 11 à 18 et 21 à 24, le dispositif de suspension 50 est de préférence porté par l'arbre d'entrée 2, et interposé radialement entre ledit arbre d'entrée 2 et le disque cycloïdal 23.

Un tel agencement permet en effet de simplifier l'agencement du réducteur 1, et par conséquent les opérations d'assemblage, et d'améliorer la compacité et le prix de revient du réducteur, tout en procurant un rattrapage de jeu efficace, au moyen d'un dispositif de suspension 50 qui tend à rappeler élastiquement le disque 23T de façon centrifuge, depuis l'axe principal (ZZ') de l'arbre d'entrée, et plus particulièrement depuis l'axe central de l'organe d'excentrique 22, vers l'extérieur et la couronne 25.

De préférence le dispositif de suspension 50 pourra plus particulièrement être interposé (radialement) entre l'organe d'excentrique 22 et le disque cycloïdal 23, tel que cela est illustré sur les figures 1, 2, 6, 11 à 18 et 21 à 24.

On pourra ainsi obtenir un montage simple, compact et robuste.

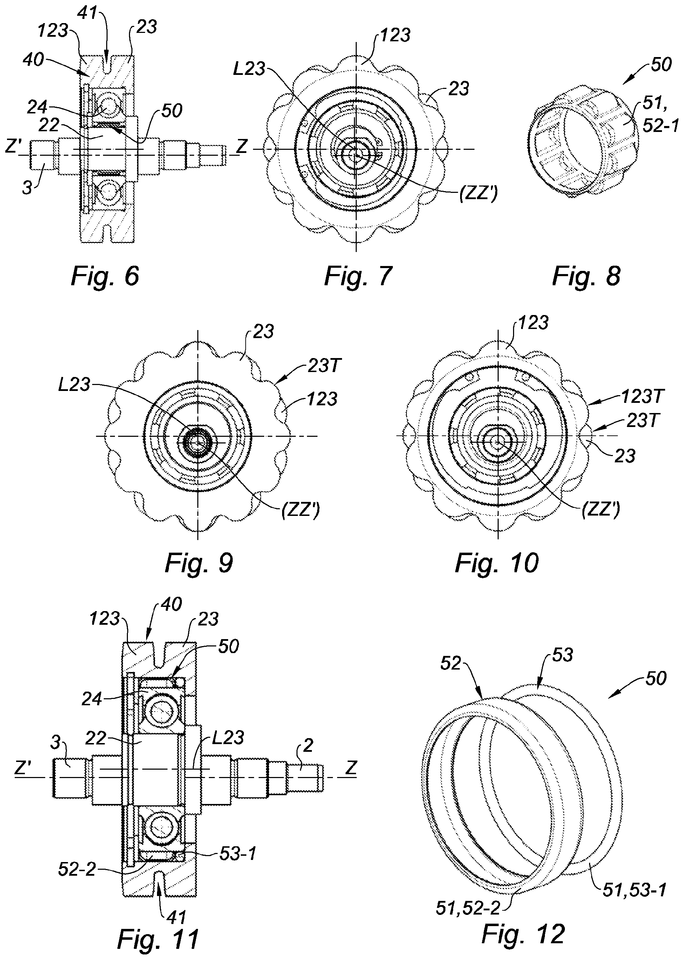

A ce titre, on pourrait envisager, tel que cela est illustré sur les figures 6 à 8, de placer radialement le dispositif de suspension 50 entre l'organe d'excentrique 22 et le palier d'excentrique 24 supportant le disque 23, et plus particulièrement contre la surface radialement externe dudit organe d'excentrique 22 d'une part, et contre la surface radialement interne de la bague radialement interne dudit palier d'excentrique 24 d'autre part.

Toutefois, de façon particulièrement préférentielle, et tel que cela est illustré sur les figures 11 à 18 et 21 à 24, le disque cycloïdal 23 étant monté en rotation sur l'organe d'excentrique 22 au moyen d'un palier d'excentrique 24 tel que décrit ci-dessus, le dispositif de suspension 50 pourra être interposé radialement entre ledit palier d'excentrique 24 et le disque cycloïdal 23.

Plus particulièrement le dispositif de suspension 50 pourra à cet effet venir en appui radialement externe sur la bague externe dudit palier d'excentrique 24, et en appui radialement interne contre le moyeu du disque 23, dont la paroi radialement interne délimite ici un logement central 42.

Un tel agencement permettra notamment d'améliorer la stabilité du montage, ainsi que la qualité du rattrapage de jeu et l'amplitude de déformation élastique disponible pour réaliser ledit rattrapage de jeu.

Ainsi, en définitive, il est envisageable que le dispositif de suspension 50 soit placé radialement en retrait du palier d'excentrique 24 (entre l'arbre d'entrée 2, et plus particulièrement l'organe d'excentrique 22, et la bague interne du palier 24), ou au contraire radialement au-delà du palier d'excentrique 24 (entre la bague externe dudit palier 24 et le disque 23).

De préférence, et tel que cela est notamment visible sur les figures 6, 8, 11 à 18 et 21 à 24, le dispositif de suspension 50 comprend au moins un organe élastique 51, 151 annulaire, qui assure une suspension radiale multidirectionnelle autour de l'axe principal (ZZ').

Avantageusement, un organe élastique annulaire, qui couvre au moins 270 degrés autour de l'axe principal (ZZ'), et de préférence qui forme un contour complet à 360 degrés autour de l'axe principal (ZZ'), et qui est élastiquement compressible (puis expansible) radialement, c'est-à-dire dans le sens de son épaisseur radiale, permet d'exercer un effort de rattrapage de jeu dans n'importe laquelle des directions azimutales possibles autour de l'axe principal (ZZ').

Ainsi, bien que la zone d'engrènement entre le disque 23 et la couronne 25 se déplace en tournant autour de l'axe principal (ZZ'), en raison de la nature cycloïdale de l'engrènement, le jeu d'engrènement est rattrapé en permanence, le disque 23 étant repoussé de façon centrifuge vers la couronne 25 dans le secteur angulaire couvert par ladite zone d'engrènement, quelle que soit la position azimutale de ladite zone d'engrènement.

Un tel agencement permet donc, au moyen d'un organe élastique 51, 151 compact, peu onéreux, de forme simple, robuste, et facile à monter autour de l'axe principal (ZZ'), de réaliser un rattrapage de jeu particulièrement efficace, dans toutes les directions autour dudit axe principal (ZZ').

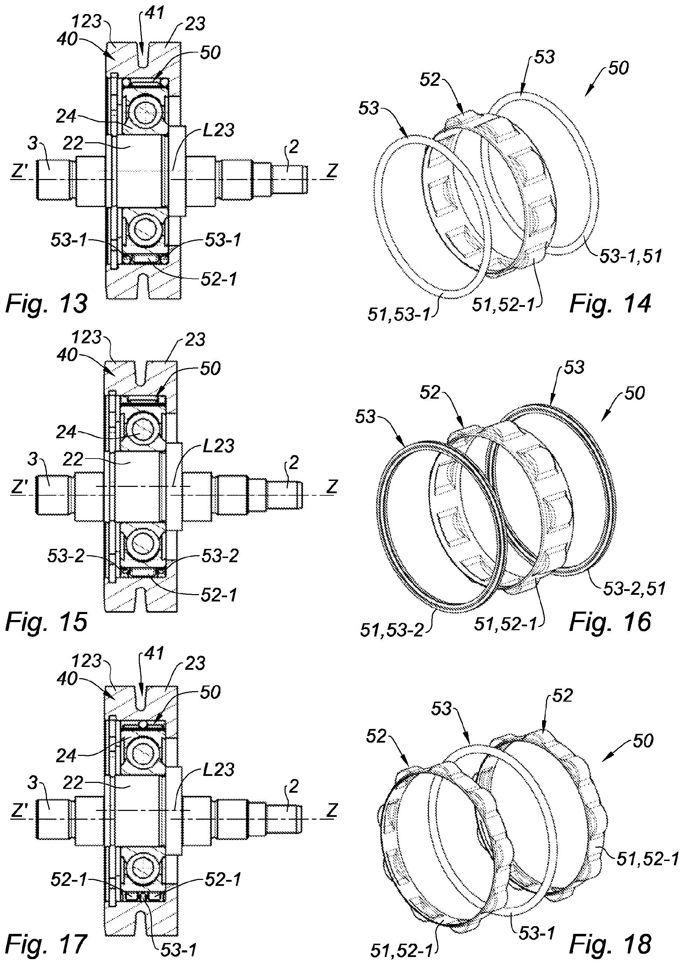

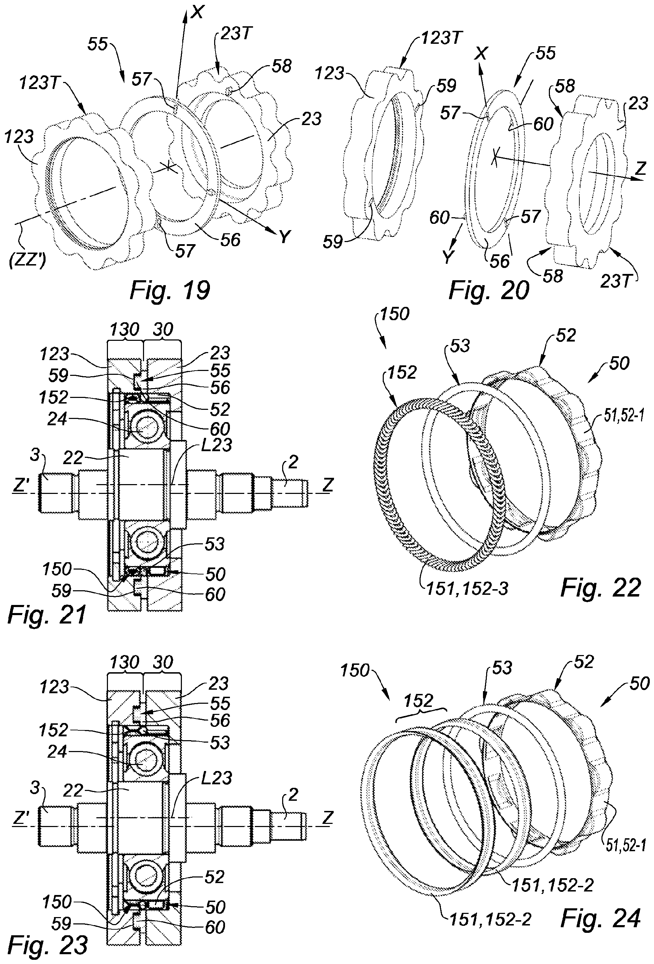

L'organe élastique 51, 151 pourra prendre toute forme appropriée, parmi notamment : ressort à lame ondulé 52-1 (figures 8, 14, 16, 18, 22, 24), par exemple du genre bague de tolérance Rencol® ou expanseur Smalley®, ressort à lame bombée 52-2, 152-2, notamment à lame incurvée en C (figures 12, 24), ressort spiral torique 152-3 du genre Balseal® (figure 22), ou bien encore anneau en élastomère tel qu'un joint torique 53-1 (figures 12, 14, 18, 22 et 24), ou joint à quatre lobes 53-2 (figure 16).

Bien entendu, on pourra librement choisir la forme de l'organe élastique 51, 151 parmi les exemples répertoriés ci-dessus (ou mêmes d'autres formes), tout organe élastique 51, 151 mentionné ci-dessus pouvant notamment être remplacé par un autre organe élastique équivalent, de forme différente mais aux propriétés élastiques comparables.

De même, bien qu'on puisse envisager un dispositif de suspension 50 constitué d'un seul organe élastique 51, comme cela est illustré sur les figures 6 et 8, on préférera utiliser, notamment pour améliorer la stabilité de la suspension, ou bien encore pour améliorer la progressivité de la suspension et conférer un effet amortisseur au dispositif de suspension 50, une combinaison de plusieurs organes élastiques 51, 151 distincts, par exemple deux organes élastiques (figures 11 et 12) ou trois organes élastiques (figures 13 à 18) étagés axialement le long de l'axe principal (ZZ').

Cette pluralité d'organes élastiques 51, 151 pourront de préférence agir ensemble à l'encontre d'un même disque 23, ou d'un même ensemble 40 de disques 23, 123 solidaires, tel que cela est illustré sur les figures 11, 13, 15, 17.

De préférence, tel que cela est illustré sur les figures 11 à 18 et 21 à 24, le dispositif de suspension 50 comprend au moins un organe élastique 51, 151 métallique formant ressort 52, 152, et au moins un organe élastique 51 en matériau élastomère formant amortisseur 53.

Avantageusement, la combinaison d'une part d'un ressort 52, 152 métallique, présentant une raideur radiale élevée, générant un puissant effort de rappel permettant de plaque le disque 23 contre la couronne 25, avec d'autre part un amortisseur 53, plus souple, capable d'absorber efficacement les chocs et les vibrations, permet de créer un effet de suspension amortie, de type ressort-amortisseur, particulièrement efficace et confortable.

De préférence, le ressort 52 et l'amortisseur 53 seront tous les deux annulaires, engagés autour de l'axe principal (ZZ'), et préférentiellement interposés radialement entre l'arbre d'entrée 2 et le disque 23, et de préférence étagés axialement, tel que décrit plus haut, de sorte à exercer parallèlement leur action sur le disque 23.

Bien entendu, on pourra utiliser pour fabriquer le ressort 52 tout matériau à la fois suffisamment rigide et élastique, et par exemple présentant un module d'Young égal ou supérieur à 0,1 GPa.

De préférence, le matériau utilisé pour former l'amortisseur présentera quant à lui une dureté Shore A comprise entre 50 et 90.

Par ailleurs, et quel que soient notamment le nombre, l'agencement et la forme du ou des organes élastiques 51, 151, annulaires ou non, lisses ou ondulés, etc., le dispositif de suspension 50 possède de préférence une course radiale élastique utile qui est égale ou supérieure à 0,05 mm, et de préférence comprise entre 0,1 mm et 0,3 mm.

Ainsi, ladite course radiale, qui correspond en pratique à l'amplitude du débattement élastique radial que le dispositif de suspension 50 peut conférer, du fait de sa déformation élastique, au disque 23 par rapport à la couronne 25, et plus particulièrement par rapport à l'axe central dudit dispositif de suspension 50 (ici confondu avec l'axe central de l'organe d'excentrique 22), représentera avantageusement une distance suffisante pour couvrir les tolérances d'assemblage prévisibles, la plage de jeu d'engrènement prévisible à compenser, et l'usure progressive du réducteur 1.

Une telle course radiale correspond à une amplitude de la plage de déformation élastique (ici la déformation élastique en compression radiale) qui est admissible par le dispositif de suspension 50, et plus particulièrement qui est admissible par son ou ses organes élastiques 51, 151 constitutifs.

Typiquement, on pourra fixer la limite de ladite plage de déformation comme correspondant à la limite d'élasticité (Re) du matériau constitutif de l'organe élastique 51, 151, ou par exemple à la limite conventionnelle avec déformation plastique à 0,2 % (Rp0,2) dudit organe élastique 51, 151.

Selon une caractéristique préférentielle qui peut constituer une invention à part entière, indépendamment de la présence ou non d'un dispositif de suspension 50 selon l'invention, et tel que cela est visible sur les figures 3 et 4, la denture cycloïdale 23T du disque 23, de même que la denture réceptrice 25T correspondante de la couronne 25, sont hélicoïdales.

En d'autres termes, les lobes formant les dents 23T, 25T du disque cycloïdal 23 et de la couronne 25 sont générés géométriquement à partir d'une section droite de base (section considérée dans un plan de coupe perpendiculaire à l'axe central L23, L25), qui présente ici un profil de cycloïde, et qui balaye une ligne moyenne génératrice qui s'enroule en hélice autour de l'axe central L23, L25.

Les dents 23T, 25T sont ainsi inclinées, en projection de côté, d'un angle d'hélice $\beta 30$ prédéterminé par rapport à l'axe central L23, L25.

Avantageusement, l'utilisation d'une denture 23T, 25T hélicoïdale permet un engrènement progressif et très étendu spatialement, avec un rapport de conduite (« *contact ratio* ») d'engrenage élevé, c'est-à-dire avec un nombre moyen de dents simultanément en prise lors de l'engrènement qui est élevé, ce qui favorise la douceur du fonctionnement du réducteur 1 et supprime les saccades, chocs, et bruits de fonctionnement.

En outre, la combinaison d'une denture 23T, 25T hélicoïdale avec un dispositif de suspension 50 permet d'améliorer encore la douceur et le confort de l'engrènement.

De surcroît, la présence du dispositif de suspension 50 permet de créer un jeu d'assemblage, et donc de créer une composante d'approche et d'ajustement radiale qui permet d'éloigner ou de rapprocher radialement le disque 23 de la couronne 25, selon les besoins, au sein de la couronne 25, lors de l'assemblage.

La présence du dispositif de suspension 50 garantit ainsi la facilité d'assemblage du disque 23 dans la couronne 25, bien que les dentures hélicoïdales soient plus sensibles aux tolérances de fabrication, et de ce fait potentiellement plus difficile à emboîter sans coincement l'une dans l'autre que des dentures droites.

Selon une possibilité d'agencement correspondant à la variante de réalisation illustrée sur la figure 5, le réducteur 1 pourrait former un réducteur à un seul étage de réduction cycloïdal 30, comprenant un seul ensemble cycloïdal au sein duquel un disque cycloïdal 23 (éventuellement fractionné en plusieurs disques cycloïdaux empilés axialement les uns contre les autres et fixés les uns aux autres) engrène sur une seule et même couronne 25 (le cas échéant commune à l'empilement de disques 23).

Selon un tel agencement à un seul étage, la transmission de mouvement entre le disque cycloïdal 23 (ou l'empilement de disques cycloïdaux 23) et l'arbre de sortie 3 pourra être obtenue, de façon connue en soi, en prévoyant sur l'arbre de sortie 3 une pluralité de doigts d'accouplement 31 rectilignes, parallèles à l'axe principal (ZZ') et disposés en cercle autour de l'axe principal (ZZ'), à intervalle régulier, lesdits doigts d'accouplement 31 coopérant chacun avec un orifice d'accouplement 32 circulaire creusé dans le disque cycloïdal 23.

Les orifices d'accouplement 32, répartis en cercle et à intervalle régulier autour de l'axe central L23 du disque cycloïdal 23, présentent un diamètre supérieur à celui des doigts d'accouplement 31, de manière à pouvoir absorber la composante de débattement radial du disque 23 par rapport à l'arbre de sortie 3 (c'est-à-dire la composante de mouvement perpendiculaire à l'axe central (ZZ'), qui est induite par la rotation de l'organe d'excentrique 22), tout en transmettant une composante de rotation w3.

Bien entendu, on pourrait, à titre de variante, faire porter les doigts d'accouplement 31 par le disque 23, et les orifices d'accouplement 32 par l'arbre de sortie.

Toutefois, selon une autre possibilité d'agencement particulièrement préférentielle, correspondant aux variantes de réalisation illustrées sur les figures 1 à 4 et 6 à 24, le réducteur cycloïdal 1 comporte deux étages de réduction 30, 130.

Avantageusement, l'utilisation d'un double étage de réduction permet d'obtenir un rapport de réduction R = $\omega 2/\omega 3$ très élevé, typiquement égal ou supérieur à 40, à 50 voire à 100, tout en conservant une bonne compacité, et notamment un faible encombrement axial le long de l'axe principal (ZZ'), du réducteur 1.

En d'autres termes, la multiplication des étages de réduction cycloïdaux permet d'augmenter la "densité" du réducteur 1, en augmentant considérablement le rapport de réduction tout en conservant un réducteur léger et compact.

Un tel réducteur 1 à double étage comporte tout d'abord un premier étage de réduction 30, qui comprend l'organe d'excentrique 22, un premier disque cycloïdal 23, dit « disque d'entrée », monté en rotation sur ledit organe d'excentrique 22 (lui-même entraîné en rotation par l'arbre d'entrée 2) et qui est pourvu d'une première denture cycloïdale 23T, ainsi qu'une première couronne 25, dite « couronne d'entrée », qui est solidaire du carter de réducteur 20 et qui est pourvue d'une première denture réceptrice 25T cycloïdale sur laquelle engrène la première denture cycloïdale 23T du disque d'entrée 23, tel que cela a été décrit plus haut.

La couronne d'entrée 25 pourra être fixée, par exemple par vissage, dans le carter de réducteur 20, et plus particulièrement dans un lamage 33 de la portion amont 20A de celui-ci, qui facilite notamment le centrage et le maintien radial de ladite couronne d'entrée 25.

Ledit réducteur 1 comporte également un second étage de réduction 130, qui comprend un second disque cycloïdal 123, dit « disque de sortie », qui est solidaire en rotation du disque d'entrée 23, et de préférence formé d'un seul tenant avec ledit disque d'entrée 2, et qui est pourvu d'une seconde denture cycloïdale 123T, ledit second étage de réduction 130 comprenant également une seconde couronne 125, dite « couronne de sortie », qui est distincte de la couronne d'entrée 25 (et distante axialement de ladite couronne d'entrée 25), qui est solidaire en rotation de l'arbre de sortie 3 (de sorte à pouvoir entraîner en rotation ledit arbre de sortie 3, et/ou être entraînée en rotation par ce dernier), et qui est pourvue d'une seconde denture réceptrice 125T cycloïdale sur laquelle engrène la seconde denture cycloïdale 123T du disque de sortie 123.

Par « solidaire en rotation », on indique que le disque de sortie 123 est couplé au disque d'entrée 23, et plus préférentiellement fixé audit disque d'entrée 23 voire formé d'un seul tenant avec ce dernier, de telle manière que la rotation du disque d'entrée 23, et plus globalement le mouvement du disque d'entrée 23 (par rapport au carter de réducteur 20), se transmet au disque de sortie 123, de préférence à l'identique, dans un même mouvement rotatif d'ensemble.

Par simple commodité de notation, les éléments du second étage de réduction 130 pourront porter une référence identique à celle des éléments analogues du premier étage de réduction 30, mais incrémentée d'une valeur 100.

Par ailleurs, le nombre Z25, Z125 de dents d'une couronne 25, 125 sera supérieur, de préférence d'une unité (d'une dent), au nombre de dents Z23, Z123 du disque 23, 123 correspondant.

On aura ainsi Z25 = Z23 + 1 et Z125 = Z123 + 1.

Au sein du réducteur 1 à double étage de réduction, le rapport de réduction R = $\omega$2/$\omega$3 sera donné par la formule :

$$1 / R = 1 - (Z25 \times Z123) / (Z23 \times Z125).$$

Le nombre de dents des différents disques 23, 123 et couronnes 25, 125 sera avantageusement choisi en fonction du rapport de réduction recherché.

A titre d'exemple, en choisissant Z23 = 25 et Z123 = 18, et par conséquent Z25 = 26 et Z125 = 19, on obtient sensiblement un rapport de réduction R = 67,9.

La couronne de sortie 125, mobile en rotation autour de l'axe principal (ZZ') par rapport au carter de réducteur 20, pourra être rapportée et fixée, par exemple par vissage, à une extrémité de l'arbre de sortie 3, qui pourra former à cet effet une collerette d'appui 34, de préférence épaulée pour faciliter le centrage de ladite couronne 125 de sortie, tel que cela est illustré sur les figures 1 et 3.

Tel que cela est illustré sur les figures 21 et 23, le premier étage de réduction 30 comprend un premier dispositif de suspension 50 qui assure au moins un rattrapage élastique radial du jeu d'engrènement entre le disque d'entrée 23 et la couronne d'entrée 25, tandis que le second étage de réduction 130 comprend un second dispositif de suspension 150, distinct du premier dispositif de suspension 50, et qui assure au moins un rattrapage élastique radial du jeu d'engrènement entre le disque de sortie 123 et la couronne de sortie 125.

L'invention propose donc de dissocier la suspension (radiale) afin de créer une suspension 50, 150 propre à chaque étage de réduction 30, 130, et indépendante (au moins en partie, voire totalement) de la suspension de l'autre étage de réduction 130, 30, ce qui procure ainsi une suspension globale particulièrement efficace, en optimisant le rattrapage de jeu au niveau de chaque étage.

Ainsi, en particulier, la direction azimutale de rattrapage de jeu entre le disque d'entrée 23 et la couronne d'entrée 25 au sein du premier étage de réduction 30, c'est-à-dire la direction azimutale selon laquelle s'exerce (principalement voire exclusivement) la poussée radiale du premier dispositif de suspension 50 à un instant considéré, pourra être différente de (sécante à) la direction azimutale de rattrapage de jeu entre le disque de sortie 123 et la couronne de sortie 125, au sein du second étage de réduction 130, c'est-à-dire différente de (et sécante à) la direction azimutale selon laquelle s'exerce (principalement voire exclusivement) la poussée radiale du second dispositif de suspension 150 au même instant considéré.

Il en ira de même de l'amplitude radiale (absolue) du rattrapage de jeu à un instant considéré, et plus globalement de la course radiale élastique utile (maximale) offerte respectivement par le premier dispositif de suspension 50 et par le second dispositif de suspension 150, qui pourra être différente, et notamment plus élevée, au sein du second étage de réduction 130 qu'au sein du premier étage de réduction 30 (ou inversement).

Selon une variante préférentielle de réalisation, on pourra dissocier la mobilité en translation, transversalement à l'axe principal (ZZ'), du disque d'entrée 23 de la mobilité en translation, transversalement à l'axe principal (ZZ'), du disque de sortie 123, de manière à pouvoir utiliser, pour chaque étage de réduction 30, 130, un dispositif de suspension 50, 150 indépendant, en configuration de disque mobile suspendu, tel que cela est illustré sur les figures 19 à 24.

Un tel agencement à disque mobile suspendu permettra de gagner en compacité et de simplifier les dispositifs de suspension, pour les raisons déjà évoquées plus haut.

A cet effet, le disque d'entrée 23 pourra de préférence être couplé au disque de sortie 123 par un joint d'accouplement 55, du genre joint de Oldham 55, de telle manière que le disque d'entrée 23 et le disque de sortie 123 soient solidaires en rotation autour de l'axe principal (ZZ'), mais possèdent une liberté en translation l'un par rapport à l'autre selon (au moins) deux directions radiales, sécantes et plus préférentiellement perpendiculaires l'une à l'autre.

Lesdites directions radiales sont notées respectivement X et Y sur les figures 19 et 20, et forment ici avec l'axe principal (ZZ') un trièdre direct.

Cette combinaison de degrés de liberté autorise, par composition, toute translation du disque d'entrée 23 par rapport au disque de sortie 123 dans un plan normal à l'axe de rotation (ZZ'), et plus globalement dans un plan normal à l'axe central L23 du disque 23 considéré, les mouvements en translation radiale du disque d'entrée 23 par rapport au disque de sortie 123 (et inversement) étant absorbés par le joint d'accouplement 55.

De préférence, au sein du joint d'accouplement 55, et plus particulièrement au sein du joint de Oldham 55, les disques d'entrée 23 et de sortie 123 sont guidés en translation radiale, par exemple par un système de rainures 57, 59 et languettes 58, 60, selon respectivement la première direction radiale X et la seconde direction radiale Y, de sorte à procurer avantageusement un accouplement rigide, précis et robuste des disques 23, 123 en rotation, tout en conservant un libre débattement radial de chaque disque 23, 123 par rapport à l'autre disque 123, 23.

Bien entendu, tout joint d'accouplement 55 équivalent à un joint de Oldham, c'est-à-dire présentant les caractéristiques cinématiques susmentionnées de couplage en rotation d'une part et de découplage en translation transverse d'autre part, typiques d'un joint de Oldham, pourra être utilisé pour coupler le disque d'entrée 23 au disque de sortie 123.

Avantageusement, le premier dispositif de suspension 50 pourra alors être interposé radialement entre l'arbre d'entrée 2 et le disque d'entrée 23, tandis que le second dispositif de suspension 150 pourra être interposé radialement entre l'arbre d'entrée 2 (le même arbre d'entrée 2, et plus particulièrement le même organe d'excentrique 22, alors partagé par les deux disques 23, 123) et le disque de sortie 123, de sorte à dissocier, de part et d'autre du joint d'accouplement (joint de Oldham) 55, l'action de suspension élastique radiale du premier étage de réduction (étage d'entrée) 30 de l'action de suspension élastique radiale du second étage de réduction (étage de sortie) 130.

De préférence, et tel que cela est illustré sur les figures 19, 20, 21 et 23, le joint d'accouplement 55, et plus particulièrement le joint de Oldham 55, est formé par une rondelle d'accouplement 56 qui est interposée axialement entre le disque d'entrée 23 et le disque de sortie 123, autour de l'axe principal (ZZ').

Plus particulièrement, le disque d'entrée 23 et le disque de sortie 123 étant de préférence tous deux montés en rotation sur l'organe d'excentrique 22 au moyen d'un même palier d'excentrique 24 commun, la rondelle d'accouplement 56 formant le joint de Oldham 55 sera de préférence interposée axialement entre le disque d'entrée 23 et le disque de sortie 123, autour dudit palier d'excentrique 24, tel que cela est illustré sur les figures 21 et 23.

Ladite rondelle d'accouplement 56 coopérera de préférence avec le disque d'entrée 23 par au moins un premier jeu de rainures 57 et languettes 58 et respectivement avec le disque de sortie 123 par un second jeu de rainures 59 et languettes 60, ledit second jeu 59, 60 de rainures et languettes étant croisé orthogonalement par rapport au premier jeu 57, 58, de sorte à définir deux degrés de liberté X, Y en translation radiale.

Plus particulièrement, tel que cela est illustré sur les figures 19 et 20, le premier jeu 57, 58 définit la première direction radiale X, et le second jeu 58, 59 la seconde direction radiale Y.

De préférence, la rondelle d'accouplement 56 présente une épaisseur sensiblement constante et vient, en dehors des zones de guidage imposées par la coopération des rainures 57, 59 et languettes 58, 60, en appui glissant de type plan sur plan, par chacune de ses faces planes (sensiblement normales à l'axe principal (ZZ')), contre la face plane correspondante (elle-même de préférence normale à l'axe principal (ZZ')) du disque d'entrée 23, respectivement contre la face plane correspondante du disque de sortie 123 (de préférence également normale à l'axe principal (ZZ')).

L'utilisation d'une telle rondelle d'accouplement 56, formant également rondelle de friction, permet de réaliser un joint de Oldham 55 particulièrement simple et compact.

Bien entendu, le matériau constitutif de la rondelle d'accouplement 56 sera choisi de sorte à présenter un faible coefficient de friction au contact des disques 23, 123, si possible de manière à être auto-lubrifié, et à être résistant à l'abrasion.

A titre d'exemple, on pourra choisir un PTFE, un PolyAmide, ou un PolyButhylène Terephtalate, ou tout autre polymère thermoplastique injectable, de préférence incluant des charges "tribologiques" favorisant le glissement (par exemple le PTFE, le graphite ou le bisulfure de molybdène), ou bien encore un matériau métallique, tel que l'acier ou l'aluminium, de préférence revêtu d'un traitement de surface "tribologique" améliorant le glissement sur et contre les disques 23, 123.

On notera par ailleurs que, avantageusement, l'épaisseur axiale de la rondelle d'accouplement 56 permet de ménager une séparation axiale entre les deux étages de réduction 30, 130, tel que cela est bien visible sur les figures 21 et 23, et permet ainsi d'éviter que le disque d'entrée 23 n'interfère ou n'engrène avec la couronne de sortie 125, et, inversement, que le disque de sortie 123 n'interfère ou n'engrène avec la couronne d'entrée 25.

De préférence, le premier dispositif de suspension 50 pourra comprendre au moins un premier organe élastique 51, de préférence annulaire, interposé radialement entre le palier d'excentrique 24 et le disque d'entrée 23, et situé axialement d'un premier côté par rapport à la rondelle d'accouplement 56, tandis que le second dispositif de suspension 150 pourra comprendre au moins un second organe élastique 151, de préférence annulaire, interposé radialement entre le palier d'excentrique 24 et le disque de sortie 123, et situé axialement d'un second côté, opposé au premier côté, par rapport à la rondelle d'accouplement 56, tel que cela est bien visible sur les figures 21 et 23.

Avantageusement, le réducteur 1 à double étage de réduction 30, 130 pourra ainsi bénéficier d'une structure porteuse commune (l'arbre d'entrée 2 et le palier d'excentrique 24), partagée par les deux étages 30, 130, mais néanmoins de suspensions 50, 150 dissociées, indépendantes pour chacun desdits étages 30, 130.

On notera à ce titre que le premier dispositif de suspension 50 pourra comprendre un ressort 52 de même nature que le ressort 152 du second dispositif de suspension 150 (par exemple, dans les deux cas, un ressort à lame ondulé), ou bien au contraire de nature différente du ressort 152 du second dispositif de suspension, tel que cela est par exemple le cas sur la figure 22, où le premier ressort 52 est formé par un ressort à lame ondulé 52-1 tandis que le second ressort 152 est formé par un ressort spiral torique 152-3, ou bien sur la figure 24, où le premier ressort 52 est formé par un ressort à lame ondulée 52-3, tandis que le second ressort 152 est formé par un empilement radial de deux ressorts à lame en $\underline{C}$ 152-2 adossés l'un à l'autre.

On notera également que le réducteur 1 pourra éventuellement comprendre un organe amortisseur 53, tel qu'un joint torique, éventuellement unique, qui est commun aux deux étages de réduction 30, 130, et donc partagé par les deux dispositifs de suspension 50, 150, tel que cela est illustré sur les figures 21 à 24.

Ledit organe amortisseur 53 partagé pourra alors être avantageusement placé à la même abscisse que la rondelle d'accouplement 56, tel que cela est bien visible sur les figures 21 et 23, entre le premier ressort 52, qui sert à suspendre (exclusivement) le disque d'entrée 23, et le second ressort 152, qui sert à suspendre (exclusivement) le disque de sortie 123,.

Un tel partage de l'amortisseur 53, dont une première moitié (considérée ici selon son plan médian, normal à l'axe principal (ZZ')) agira au niveau du premier étage 30 et la second moitié opposée agira au niveau du second étage 130, permettra notamment de gagner en compacité, sans compromettre l'indépendance de la suspension des deux étages 30, 130, qui est assurée par des ressorts 52, 152 distincts et axialement distants l'un de l'autre.

Par ailleurs, lorsque le réducteur 1 comprend deux étages de réduction 30, 130, au moins l'un des deux étages, et de préférence chacun des deux étages, utilisera de préférence une denture cycloïdale hélicoïdale.

En d'autres termes, et de façon particulièrement préférentielle, les dentures cycloïdales 23T, 25T, 123T, 125T du disque d'entrée 23 et de la couronne d'entrée 25 d'une part, du disque de sortie 123 et de la couronne de sortie 125 d'autre part, sont hélicoïdales, et présentent à ce titre respectivement un angle d'hélice dit « angle d'hélice d'entrée » $\beta 30$ et un angle d'hélice dit « angle d'hélice de sortie » $\beta 130$, tel que cela est bien visible sur la figure 4.

Lesdits angles d'hélice $\beta 30$, $\beta 130$ caractérisent l'inclinaison des dents par rapport à l'axe central L23, L25 de leur disque 23, 123 ou de leur couronne 25, 125 respectif, et plus globalement par rapport à l'axe principal (ZZ') auquel lesdits axes centraux sont de préférence parallèles.

Avantageusement, l'ensemble des étages de réduction cycloïdaux 30, 130 du réducteur 1 présente ainsi un fonctionnement doux et silencieux.

De préférence, et tel que cela est bien visible sur les figures 6 et 10, l'angle d'hélice d'entrée $\beta 30$ et l'angle d'hélice de sortie $\beta 130$ sont orientés dans le même sens par rapport à l'axe principal (ZZ'), de telle sorte que le premier étage de réduction 30 et le second étage de réduction 130 sont agencés selon une disposition à dentures 23T, 25T, respectivement 123T, 125T sensiblement parallèles.

Plus particulièrement, l'angle d'hélice du disque d'entrée 23 (par convention + $\beta 30$) est de même signe que l'angle d'hélice du disque de sortie 123 (par convention + $\beta 130$), c'est-à-dire est incliné dans le même sens par rapport à l'axe principal (ZZ'), voire sensiblement parallèle à (et donc à la fois de même signe et de même valeur que) l'angle d'hélice du disque de sortie 123, tandis que, respectivement, l'angle d'hélice de la couronne d'entrée 25 (par convention -$\beta 30$ car il est de même valeur que l'angle d'hélice du disque d'entrée 23, mais de signe opposé par nécessité de construction) est de même signe que l'angle d'hélice de la couronne de sortie 125 (par convention -$\beta 130$), voire sensiblement parallèle audit angle d'hélice de la couronne de sortie 125.

Avantageusement, à l'inverse d'un agencement en chevrons, un agencement (sensiblement) parallèle des dentures, c'est-à-dire un agencement selon lequel l'angle d'hélice $\beta 30$ du premier étage 30 et l'angle d'hélice $\beta 130$ du second étage 130 sont de même signe, c'est-à-dire ont le même sens d'inclinaison par rapport à l'axe principal (ZZ'), permet de faire supporter par le réducteur 1 lui-même les efforts axiaux qui sont produits par l'inclinaison des dentures hélicoïdales.

Ainsi, on peut limiter, voire sensiblement annuler, la résultante d'effort axiale qui est générée selon l'axe principal (ZZ') en raison de l'utilisation des dentures hélicoïdales, ce qui évite d'avoir à faire supporter une telle composante d'effort axiale par des paliers (roulements) extérieurs au réducteur 1.

Le réducteur 1 peut ainsi avantageusement être implanté au sein du système de direction assistée 4 sans qu'il soit nécessaire de modifier ou de renforcer par ailleurs le mécanisme de direction 6.

Dans l'absolu, il est possible d'avoir des angles d'hélice rigoureusement parallèles entre le premier étage 30 et le second étage 30, c'est-à-dire que l'on a : β30 = β130 (donc + β30 = + β130 et -β30 = -β130).

Toutefois, selon une possibilité préférentielle d'agencement, la valeur (amplitude) de l'angle d'hélice d'entrée β30 est différente de la valeur (amplitude) de l'angle d'hélice de sortie β130.

Plus particulièrement, ces deux valeurs d'angle d'hélice β30, β130 sont de préférence ajustées de manière à obtenir, notamment au regard du nombre de dents Z23, Z123 et du module respectif m23, m123 de chaque disque cycloïdal 23, 123, une compensation optimisée des efforts axiaux.

En effet, pour un engrenage hélicoïdal d'angle d'hélice β, de rayon primitif r (avec r = 1/2 * m * Z, où $\underline{m}$ est le module et Z le nombre de dents), la composante d'effort axiale Fa générée vaut : Fa = T * sin(β) / r = 2*T*sin(β)/(m*Z), où T représente le couple transmis.

En appliquant cette formule à chaque étage de réduction 30, 130, on peut exprimer une relation entre l'angle d'hélice d'entrée β30 et l'angle d'hélice de sortie β130 qui permet à chaque étage 30, 130 de neutraliser l'effort axial généré par l'autre étage 130, 30.

Plus particulièrement, on pourra calculer l'angle d'hélice de sortie β130 comme suit :

$$\sin \beta130 = \sin \beta30 * (m123 * Z123) / (m23 * Z23)$$

A titre d'exemple, un disque de sortie 123 présentant un angle d'hélice β130 = 25,33 deg, un module m123 = 4,5 mm et un nombre de dents Z123 = 18, pourra compenser les efforts axiaux générés par un disque d'entrée 23 possédant un angle d'hélice β30 de 25,00 deg, un module m23 = 3,2 mm et un nombre de dents Z23 = 25.

Par ailleurs, la majorité des dents (lobes cycloïdaux), et de préférence la totalité des dents, qui constituent la denture réceptrice 25T, 125T de la ou des couronnes 25, 125 sont de préférence formées d'un seul tenant avec leur couronne 25, 125 respective.

Un tel agencement monolithique des dentures 25T, 125T permettra, par comparaison avec les anciennes dentures réalisées par un ensemble de pions individuels, d'augmenter la robustesse des couronnes 25, 125 et, surtout, d'améliorer la précision du façonnage (hélicoïdal) des dents et la précision du positionnement desdites dents les unes par rapport aux autres, ce qui améliorera la qualité de l'engrènement tout en permettant de réduire significativement le temps de fabrication nécessaire pour assembler le réducteur 1.

Le façonnage des dentures 25T, 125T, et plus globalement des couronnes, sous formes d'anneaux fermés, qui entourent l'axe central L25 de la couronne, et donc l'axe principal (ZZ'), en continu sur 360 degrés, pourra être réalisé par exemple par moulage et/ou par taillage.

Le matériau utilisé pour fabriquer les couronnes 25, 125, et leurs dentures respectives 25T, 125T, pourra être un acier, éventuellement traité (par exemple par traitement thermique) pour augmenter sa dureté de surface et/ou réduire son coefficient de frottement par rapport au disque cycloïdal 23, 123.

On notera qu'il en ira de préférence de même pour chaque disque cycloïdal 23, 123, dont la majorité et de préférence la totalité des dents formant la denture 23T, 123T sera préférentiellement formée d'un seul tenant, par exemple par moulage et/ou par taillage, avec le disque 23, 123 concerné.

Avantageusement, le fait de regrouper solidairement toutes les dents 23T, 123T d'un disque sur ledit disque 23, 123, et/ou respectivement toutes les dents 25T, 125T d'une couronne sur ladite couronne 25, 125, permet en outre au dispositif de suspension 50 d'exercer un rattrapage de jeu collectif, en agissant simultanément sur l'ensemble desdites dents 23T, 123T, respectivement 25T, 125T, du seul fait que ledit dispositif de suspension 50 peut conférer au disque 23, respectivement à la couronne 25, un mouvement d'ensemble (et plus particulièrement une composante radiale de déplacement d'ensemble).

Ainsi, on peut simplifier l'agencement du dispositif de suspension 50, et l'on élimine les défauts inhérents aux dispositifs antérieurement connus de réglage de jeu par pré-charge individuelle, au sein desquels le réglage de jeu s'effectuait dent par dent, et qui, outre la complexité du réglage, présentaient un risque de serrage excessif ou au contraire d'insuffisance du rattrapage de jeu.

Par ailleurs, selon une variante de mise en œuvre, le disque d'entrée 23 et le disque de sortie 123 pourront être réunis solidairement l'un à l'autre pour former un sous-ensemble de disques 40, animé d'un même mouvement d'ensemble (par rapport au carter de réducteur 20), tel que cela est ici illustré, de façon non limitative, sur les figures 1, 6, 11, 13, 15 et 17.

Selon une possibilité de réalisation de cette variante, le disque d'entrée 23 et le disque de sortie 123 pourront être fabriqués sous formes de pièces séparées, puis être assemblés l'un à l'autre pour former solidairement ledit sous-ensemble, par exemple par des vis de fixation.

Toutefois, selon une autre possibilité préférentielle de réalisation de cette même variante, le disque d'entrée 23 et le disque de sortie 123, avec leur dentures 23T, 123T respectives, pourront être formés d'un seul tenant l'un avec l'autre, de sorte à constituer un sous-ensemble 40 unique, monolithique, dont chaque disque 23, 123 forme de préférence une extrémité axiale, tel que cela est illustré sur la figure 1.

Dans tous les cas, on prévoira de préférence une gorge 41 qui séparera axialement, de façon partielle, le disque d'entrée 23 du disque de sortie 123, au moins sur une plage de rayons (par rapport à l'axe central L23 commun aux deux disques) qui couvre le secteur annulaire qui correspond à la hauteur des dentures 23T, 123T, tel que cela est bien visible sur les figures 1 et 4.

Ladite gorge 41 matérialise la séparation axiale entre les deux étages de réduction 30, 130 et permet avantageusement d'éviter que le disque d'entrée 23 n'interfère ou n'engrène avec la couronne de sortie 125, et, inversement, que le disque de sortie 123 n'interfère ou n'engrène avec la couronne d'entrée 25.

En outre, une telle gorge 41 peut former, le cas échéant, un dégagement d'outil facilitant le taillage ou la rectification des dentures 23T, 123T des disques 23, 123.

Le sous-ensemble 40 de disques comprendra en outre de préférence un logement central tubulaire 42 conçu pour accueillir, selon un montage ajusté, l'organe d'excentrique 22 et le palier d'excentrique 24, ainsi que, de préférence, le dispositif de suspension 50 assurant la suspension dudit sous-ensemble.

Le ou les disques 23, 123, et donc plus globalement le sous-ensemble 40, pourront être par exemple formés en acier, qui pourra de préférence être traité (par exemple par traitement thermique) pour augmenter sa dureté de surface et/ou réduire son coefficient de frottement.

Bien entendu, l'invention concerne également en tant que telles les "pièces détachées" cycloïdales permettant de réaliser l'un et/ou l'autre des étages de réduction 30, 130.

En particulier, l'invention concernera en tant que tel un sous-ensemble comprenant un arbre d'entrée 2 porteur d'un organe d'excentrique 22 sur lequel est monté en rotation au moins un disque cycloïdal 23, 123, et le cas échéant deux disques cycloïdaux 23, 123, éventuellement assemblés par un joint d'accouplement tel qu'un joint de Oldham 55, ainsi qu'un, voire deux, dispositifs de suspension 50, 150 assurant une suspension radiale desdits disques 23, 123 par rapport à l'organe d'excentrique 22.

L'invention portera de même en tant que telle sur un sous-ensemble comprenant un premier disque cycloïdal 23 coopérant avec un second disque cycloïdal 123 par un joint d'accouplement tel qu'un joint de Oldham 55, et plus particulièrement par l'intermédiaire d'une rondelle d'accouplement 56 à rainures 57, 59 et languettes 58, 60, interposée axialement entre les deux disques 23, 123, de préférence au contact direct de ces derniers.

Bien entendu, l'invention n'est nullement limitée aux seules variantes de réalisation décrites dans ce qui précède, l'homme du métier étant notamment susceptible d'isoler ou de combiner librement entre elles l'une ou l'autre des caractéristiques susmentionnées, ou de leur substituer des équivalents.

**Revendications**

**1.** Réducteur (1) à engrenage cycloïdal comprenant un arbre d'entrée (2), monté en rotation dans un carter de réducteur (20) selon un axe dit « axe principal » (ZZ'), un organe d'excentrique (22) porté par l'arbre d'entrée (2) et entraîné en rotation par ce dernier, au moins un disque cycloïdal (23) qui est monté en rotation sur ledit organe d'excentrique (22) et qui est pourvu d'une denture cycloïdale (23T), au moins une couronne (25) pourvue d'une denture réceptrice (25T) sur laquelle engrène la denture cycloïdale (23T) du disque cycloïdal (23), et un arbre de sortie (3), distinct de l'arbre d'entrée (2), qui est agencé de manière à être entraîné en rotation par le disque cycloïdal (23), ledit réducteur étant **caractérisé en ce qu'**il comprend un dispositif de suspension (50) qui est agencé pour rappeler élastiquement la denture (23T) cycloïdale du disque cycloïdal (23) et la denture réceptrice (25T) de la couronne (25) l'une contre l'autre, de manière à assurer un rattrapage automatique de jeu d'engrènement entre ledit disque cycloïdal (23) et ladite couronne (25) selon au moins une composante radiale à l'axe principal (ZZ'),
et **en ce qu'**il comporte deux étages de réduction (30, 130), dont un premier étage de réduction (30), qui comprend l'organe d'excentrique (22), un premier disque cycloïdal (23), dit « disque d'entrée », qui est monté en rotation sur ledit organe d'excentrique et qui est pourvu d'une première denture cycloïdale (23T), ainsi qu'une première couronne (25), dite « couronne d'entrée », qui est solidaire du carter de réducteur (20) et qui est pourvue d'une première denture réceptrice (25T) cycloïdale sur laquelle engrène la première denture (23T) cycloïdale du disque d'entrée (23), et un second étage de réduction (130), qui comprend un second disque cycloïdal (123), dit « disque de sortie », qui est solidaire en rotation du disque d'entrée (23), et qui est pourvu d'une seconde denture cycloïdale (123T), ledit second étage de réduction comprenant également une seconde couronne (125), dite « couronne de sortie », qui est distincte de la couronne d'entrée, qui est solidaire en rotation de l'arbre de sortie, et qui est pourvue d'une seconde denture réceptrice (125T) cycloïdale sur laquelle engrène la seconde denture (123T) cycloïdale du disque de sortie, et **en ce que** le premier étage de réduction (30) comprend un premier dispositif de suspension (50) qui assure au moins un rattrapage élastique radial du jeu d'engrènement entre le disque d'entrée (23) et la couronne d'entrée (25), tandis que le second étage de réduction (130) comprend un second dispositif de suspension (150), distinct du premier dispositif de suspension (50), et qui assure au moins un rattrapage élastique radial du jeu d'engrènement entre le disque de sortie (123) et la couronne de sortie (125).

2. Réducteur selon la revendication 1 **caractérisé en ce que** le dispositif de suspension (50) est porté par l'arbre d'entrée (2) et interposé radialement entre ledit arbre d'entrée (2) et le disque cycloïdal (23), de préférence entre l'organe d'excentrique (22) et le disque cycloïdal (23), et, de façon particulièrement préférentielle, le disque cycloïdal (23) étant monté en rotation sur l'organe d'excentrique (22) au moyen d'un palier d'excentrique (24), entre ledit palier d'excentrique (24) et le disque cycloïdal (23).

3. Réducteur selon la revendication 1 ou 2 **caractérisé en ce que** le dispositif de suspension comprend au moins un organe élastique (51, 151) annulaire, qui assure une suspension radiale multidirectionnelle autour de l'axe principal (ZZ').

4. Réducteur selon l'une quelconque des revendications précédentes **caractérisé en ce que** le dispositif de suspension (50) possède une course radiale élastique utile qui est égale ou supérieure à 0,05 mm, et de préférence comprise entre 0,1 et 0,3 mm.

5. Réducteur selon l'une quelconque des revendications précédentes **caractérisé en ce que** le dispositif de suspension comprend au moins un organe élastique (51, 151) métallique formant ressort (52, 152), et au moins un organe élastique (51) en matériau élastomère formant amortisseur (53).

6. Réducteur selon l'une quelconque des revendications précédentes **caractérisé en ce que** le disque d'entrée (23) est couplé au disque de sortie (123) par un joint d'accouplement (55), du genre joint de Oldham (55), de telle manière que le disque d'entrée (23) et le disque de sortie (123) sont solidaires en rotation autour de l'axe principal (ZZ'), mais possèdent une liberté en translation l'un par rapport à l'autre selon deux directions radiales (X, Y), perpendiculaires l'une à l'autre, et **en ce que** le premier dispositif de suspension (50) est interposé radialement entre l'arbre d'entrée (2) et le disque d'entrée (23), tandis que le second dispositif de suspension (150) est interposé radialement entre l'arbre d'entrée (2) et le disque de sortie (123), de sorte à dissocier, de part et d'autre du joint d'accouplement (55), l'action de suspension élastique radiale du premier étage de réduction (30) de l'action de suspension élastique radiale du second étage de réduction (130).

7. Réducteur selon la revendication 6 **caractérisé en ce que** le disque d'entrée (23) et le disque de sortie (123) sont tous deux montés en rotation sur l'organe d'excentrique (22) au moyen d'un même palier d'excentrique (24) commun, **en ce que** le joint d'accouplement (55), et plus particulièrement le joint de Oldham (55), est formé par une rondelle d'accouplement (56) qui est interposée axialement entre le disque d'entrée (23) et le disque de sortie (123), autour du palier d'excentrique (24), ladite rondelle d'accouplement (56) coopérant avec le disque d'entrée (23) par au moins un premier jeu de rainures (57) et languettes (58) et respectivement avec le disque de sortie (123) par un second jeu de rainures (59) et languettes (60), ledit second jeu de rainures (59) et languettes (60) étant croisé orthogonalement par rapport au premier jeu (57, 58) de sorte à définir deux degrés de liberté en translation radiale (X, Y), et **en ce que** le premier dispositif de suspension (50) comprend au moins un premier organe élastique (51), de préférence annulaire, interposé radialement entre le palier d'excentrique (24) et le disque d'entrée (23), et situé axialement d'un premier côté par rapport à la rondelle d'accouplement (56), tandis que le second dispositif de suspension (150) comprend au moins un second organe élastique (151), de préférence annulaire, interposé radialement entre le palier d'excentrique (24) et le disque de sortie (123), et situé axialement d'un second côté, opposé au premier côté, par rapport à la rondelle d'accouplement (56).

8. Réducteur (1) selon l'une quelconque des revendications précédentes **caractérisé en ce que** la denture cycloïdale (23T) du disque (23) et la denture réceptrice (25T) correspondante de la couronne (25) sont hélicoïdales.

9. Système de direction assistée (4) comprenant un moteur d'assistance (5), un mécanisme de direction (6) permettant de modifier l'angle de braquage d'un ou plusieurs organes directionnels (7, 8), tels qu'une ou plusieurs roues directrices, ledit système de direction assistée (4) étant **caractérisé en ce qu'**il comporte un réducteur cycloïdal (1) selon l'une des revendications 1 à 8 pour assurer une transmission mécanique entre le moteur d'assistance (5) et le mécanisme de direction (6).

**Patentansprüche**

1. Zykloidisches Untersetzungsgetriebe (1), umfassend eine Eingangswelle (2), die in einem Getriebegehäuse (20) gemäß einer "Hauptachse" genannten Achse (ZZ') drehend montiert ist, ein Exzenterorgan (22), das von der Eingangswelle (2) getragen und durch diese letztere in Drehung angetrieben wird, mindestens eine Zykloidscheibe (23), die drehend auf dem Exzenterorgan (22) montiert ist und die mit einer Zykloidverzahnung (23T) versehen ist, mindestens einen Kranz (25), der mit einer Aufnahmeverzahnung (25T) versehen ist, in die die Zykloidverzahnung (23T) der Zykloidscheibe (23) eingreift, und eine Ausgangswelle (3), von der Eingangswelle (2) getrennt, die derart angeordnet ist, um von der Zykloidscheibe (23) in Drehung angetrieben zu werden, wobei das Getriebe **dadurch gekennzeichnet ist, dass** es eine Aufhängungsvorrichtung (50) umfasst, die ausgeführt ist, um die Zykloidverzahnung (23T) der Zykloidscheibe (23) und die Aufnahmeverzahnung (25T) des Kranzes (25) elastisch gegeneinander vorzuspannen, um für eine automatische Nachstellung eines Eingriffsspiels zwischen der Zykloidscheibe (23) und dem Kranz (25) gemäß mindestens einer zur Hauptachse (ZZ') radialen Komponente zu sorgen,
und dadurch, dass es zwei Untersetzungsstufen (30, 130) beinhaltet, darunter eine erste Untersetzungsstufe (30), die das Exzenterorgan (22), eine erste, "Eingangsscheibe" genannte, Zykloidscheibe (23), die drehend auf dem Exzenterorgan montiert ist, und die mit einer ersten Zykloidverzahnung (23T) versehen ist, sowie einen ersten, "Eingangskranz" genannten, Kranz (25) umfasst, der fest mit dem Getriebegehäuse (20) verbunden ist, und der mit einer ersten Zykloidaufnahmeverzahnung (25T) versehen ist, in die die erste Zykloidverzahnung (23T) der Eingangsscheibe (23) eingreift, und eine zweite Untersetzungsstufe (130), die eine zweite, "Ausgangsscheibe" genannte, Zykloidscheibe (123) umfasst, die mit der Eingangsscheibe (23) drehfest verbunden ist, und die mit einer zweiten Zykloidverzahnung (123T) versehen ist, wobei die zweite Untersetzungsstufe auch einen zweiten, "Ausgangskranz" genannten, Kranz (125) umfasst, der von dem Eingangskranz getrennt ist, der mit der Ausgangswelle drehfest verbunden ist, und der mit einer zweiten Zykloidaufnahmeverzahnung (125T) versehen ist, in die die zweite Zykloidverzahnung (123T) der Ausgangsscheibe eingreift, und dadurch, dass die erste Untersetzungsstufe (30) eine erste Aufhängungsvorrichtung (50) umfasst, die für mindestens eine radiale elastische Nachstellung des Eingriffsspiels zwischen der Eingangsscheibe (23) und dem Eingangskranz (25) sorgt, während die zweite Untersetzungsstufe (130) eine zweite Aufhängungsvorrichtung (150) umfasst, die von der ersten Aufhängungsvorrichtung (50) getrennt ist, und die für mindestens eine radiale elastische Nachstellung des Eingriffsspiels zwischen der Ausgangsscheibe (123) und dem Ausgangskranz (125) sorgt.

2. Getriebe nach Anspruch 1, **dadurch gekennzeichnet, dass** die Aufhängungsvorrichtung (50) von der Eingangswelle (2) getragen wird, und radial zwischen der Eingangswelle (2) und der Zykloidscheibe (23), vorzugsweise zwischen dem Exzenterorgan (22) und der Zykloidscheibe (23) eingesetzt ist, und die Zykloidscheibe (23) in ganz besonders bevorzugter Weise anhand eines Exzenterlagers (24) zwischen dem besagten Exzenterlager (24) und der Zykloidscheibe (23) drehend auf dem Exzenterorgan (22) montiert ist.

3. Getriebe nach Anspruch 1 oder 2, **dadurch gekennzeichnet, dass** die Aufhängungsvorrichtung mindestens ein ringförmiges elastisches Organ (51, 151) umfasst, das für eine radiale Aufhängung in mehrere Richtungen um die Hauptachse (ZZ') herum gewährleistet.

4. Getriebe nach einem der vorstehenden Ansprüche, **dadurch gekennzeichnet, dass** die Aufhängungsvorrichtung (50) einen elastischen radialen Nutzhub besitzt, der größer oder gleich 0,05 mm ist, und vorzugsweise zwischen 0,1 und 0,3 mm enthalten ist.

5. Getriebe nach einem der vorstehenden Ansprüche, **dadurch gekennzeichnet, dass** die Aufhängungsvorrichtung mindestens ein metallisches elastisches Organ (51, 151) umfasst, das eine Feder (52, 152) bildet, und mindestens ein elastisches Organ (51) aus Elastomer-Material, das einen Dämpfer (53) bildet.

6. Getriebe nach einem der vorstehenden Ansprüche, **dadurch gekennzeichnet, dass** die Eingangsscheibe (23) durch eine Kopplungsdichtung (55) in der Art einer Oldham-Dichtung (55) an die Ausgangsscheibe (123) gekoppelt ist, dass die Eingangsscheibe (23) und die Ausgangsscheibe (123) um die Hauptachse (ZZ') herum drehfest verbunden sind, jedoch eine Translationsfreiheit zueinander in zwei radiale Richtungen (X, Y), senkrecht zueinander besitzen, und dadurch, dass die erste Aufhängungsvorrichtung (50) radial zwischen der Eingangswelle (2) und der Eingangsscheibe (23) eingesetzt ist, während die zweite Aufhängungsvorrichtung (150) radial zwischen der Eingangswelle (2) und der Ausgangsscheibe (123) eingesetzt ist, um beiderseits der Kopplungsdichtung (55) die radiale elastische Aufhängungsaktion der ersten Untersetzungsstufe (30) von der radialen elastischen Aufhängungsaktion der zweiten Untersetzungsstufe (130) zu trennen.

7. Getriebe nach Anspruch 6, **dadurch gekennzeichnet, dass** die Eingangsscheibe (23) und die Ausgangsscheibe (123) beide anhand eines selben gemeinsamen Exzenterlagers (24) drehend auf dem Exzenterorgan (22) montiert sind, dadurch, dass die Kopplungsdichtung (55), und genauer die Oldham-Dichtung (55) durch eine Kopplungsscheibe (56) gebildet wird, die axial zwischen der Eingangsscheibe (23) und der Ausgangsscheibe (123) um das Exzenterlager (24) herum eingesetzt ist, wobei die Kopplungsscheibe (56) durch mindestens einen ersten Satz an Nuten (57) und Federn (58) mit der Eingangsscheibe (23), und beziehungsweise durch einen zweiten Satz an Nuten (59) und Federn (60) mit der Ausgangsscheibe (123) zusammenwirkt, wobei der zweite Satz an Nuten (59) und Federn (60) orthogonal in Bezug auf den ersten Satz (57, 58) gekreuzt ist, um zwei Freiheitsgrade in radialer Translation (X, Y) zu definieren, und dadurch, dass die erste Aufhängungsvorrichtung (50) mindestens ein erstes, vorzugsweise ringförmiges, elastisches Organ (51) umfasst, das radial zwischen dem Exzenterlager (24) und der Eingangsscheibe (23) eingesetzt ist, und sich axial auf einer ersten Seite in Bezug auf die Kopplungsscheibe (56) befindet, während die zweite Aufhängungsvorrichtung (150) mindestens ein zweites, vorzugsweise ringförmiges, elastisches Organ (151) umfasst, das radial zwischen dem Exzenterlager (24) und der Ausgangsscheibe (123) eingesetzt ist, und sich axial auf einer zweiten Seite, gegenüber der ersten Seite, in Bezug auf die Kopplungsscheibe (56) befindet.

8. Getriebe (1) nach einem der vorstehenden Ansprüche, **dadurch gekennzeichnet, dass** die Zykloidverzahnung (23T) der Scheibe (23) und die entsprechende Aufnahmeverzahnung (25T) des Kranzes (25) schraubenförmig sind.

9. Servolenkungssystem (4), umfassend einen Unterstützungsmotor (5), einen Lenkmechanismus (6), der es ermöglicht, den Einlenkwinkel eines oder mehrerer Lenkorgane (7, 8), wie eines oder mehrerer Lenkräder zu ändern, wobei das Servolenkungssystem (4) **dadurch gekennzeichnet ist, dass** es ein Zykloidgetriebe (1) nach einem der Ansprüche 1 bis 8 beinhaltet, um für eine mechanische Übertragung zwischen dem Unterstützungsmotor (5) und dem Lenkmechanismus (6) zu gewährleisten.

## Claims

1. A cycloidal gear reducer (1) comprising an input shaft (2), mounted in rotation in a reducer casing (20) according to an axis called « main axis » (ZZ'), an eccentric member (22) carried by the input shaft (2) and driven in rotation by the latter, at least one cycloidal disk (23) which is mounted in rotation on said eccentric member (22) and which is provided with a cycloidal toothing (23T), at least one rim (25) provided with a receiving toothing (25T) on which the cycloidal toothing (23T) of the cycloidal disk (23) meshes, and an output shaft (3), distinct from the input shaft (2), which is arranged so as to be driven in rotation by the cycloidal disk (23), said reducer being **characterized in that** it comprises a suspension device (50) which is arranged to elastically bias the cycloidal toothing (23T) of the cycloidal disk (23) and the receiving toothing (25T) of the rim (25) against each other, so as to provide an automatic adjustment of the backlash between said cycloidal disk (23) and said rim (25) according to at least one component radial to the main axis (ZZ'),
and **in that** it includes two reduction stages (30, 130), including a first reduction stage (30), which comprises the eccentric member (22), a first cycloidal disk (23), called « input disk », which is mounted in rotation on said eccentric member and which is provided with a first cycloidal toothing (23T), as well as a first rim (25), called « input rim », which is secured to the reducer casing (20) and which is provided with a first cycloidal receiving toothing (25T) on which the first cycloidal toothing (23T) of the input disk (23) meshes, and a second reduction stage (130), which comprises a second cycloidal disk (123), called « output disk », which is secured in rotation to the input disk (23), and which is provided with a second cycloidal toothing (123T), said second reduction stage also comprising a second rim (125), called « output rim », which is distinct from the input rim, which is secured in rotation to the output shaft, and which is provided with a second cycloidal receiving toothing (125T) on which the second cycloidal toothing (123T) of the output disk meshes, and **in that** the first reduction stage (30) comprises a first suspension device (50) which provides at least one radial elastic adjustment of the backlash between the input disk (23) and the input rim (25), whereas the second reduction stage (130) comprises a second suspension device (150), distinct from the first suspension device (50), and which provides at least one radial elastic adjustment of the backlash between the output disk (123) and the output rim (125).

2. The reducer according to claim 1, **characterized in that** the suspension device (50) is carried by the input shaft (2) and interposed radially between said input shaft (2) and the cycloidal disk (23), preferably between the eccentric member (22) and the cycloidal disk (23), and in a particularly preferred manner, the cycloidal disk (23) being mounted in rotation on the eccentric member (22) by means of an eccentric bearing (24) between said eccentric bearing (24) and the cycloidal disk (23).

3. The reducer according to claim 1 or 2, **characterized in that** the suspension device comprises at least one annular elastic member (51, 151), which provides a multidirectional radial suspension about the main axis (ZZ').

4. The reducer according to any one of the preceding claims, **characterized in that** the suspension device (50) has a useful elastic radial stroke which is equal to or larger than 0.05 mm, and preferably comprised between 0.1 and 0.3 mm.

5. The reducer according to any one of the preceding claims, **characterized in that** the suspension device comprises at least one metallic elastic member (51, 151) forming a spring (52, 152) and at least one elastic member (51) made of elastomeric material forming a damper (53).

6. The reducer according to any of the preceding claims, **characterized in that** the input disk (23) is coupled to the output disk (123) by a coupling joint (55), such as an Oldham coupling (55), such that the input disk (23) and the output disk (123) are secured in rotation about the main axis (ZZ'), but have a translational freedom relative to each other in two radial directions (X, Y), perpendicular to each other, and **in that** the first suspension device (50) is interposed radially between the input shaft (2) and the input disk (23), whereas the second suspension device (150) is interposed radially between the input shaft (2) and the output disk (123), so as to dissociate, on either side of the coupling joint (55), the radial elastic suspension action of the first reduction stage (30) from the radial elastic suspension action of the second reduction stage (130).

7. The reducer according to claim 6, **characterized in that** the input disk (23) and the output disk (123) are both mounted in rotation on the eccentric member (22) by means of the same common eccentric bearing (24), **in that** the coupling joint (55), and more particularly the Oldham coupling (55), is formed by a coupling washer (56) which is interposed axially between the input disk (23) and the output disk (123), around the eccentric bearing (24), said coupling washer (56) cooperating with the input disk (23) by at least one first set of slots (57) and tabs (58) and respectively with the output disk (123) by a second set of slots (59) and tabs (60), said second set of slots (59) and tabs (60) intersecting orthogonally with respect to the first set (57, 58) so as to define two degrees of freedom in radial translation (X, Y), and **in that** the first suspension device (50) comprises at least one first elastic member (51), preferably annular, interposed radially between the eccentric bearing (24) and the an input disk (23), and located axially on a first side with respect to the coupling washer (56), whereas the second suspension device (150) comprises at least one second elastic member (151), preferably annular, interposed radially between the eccentric bearing (24) and the output disk (123), and located axially on a second side, opposite to the first side, with respect to the coupling washer (56).

8. The reducer (1) according to any one of the preceding claims, **characterized in that** the cycloidal toothing (23T) of the disk (23) and the corresponding receiving toothing (25T) of the rim (25) are helical.

9. A power steering system (4) comprising an assist motor (5), a steering mechanism (6) allowing modifying the steering angle of one or more steering member(s) (7, 8), such as one or more steered wheel(s), said power steering system (4) being **characterized in that** it includes a cycloidal reducer (1) according to any of claims 1 to 8 in order to provide a mechanical transmission between the assist motor (5) and the steering mechanism (6).

*Fig. 1*

*Fig. 2*

Fig. 3

Fig. 4

Fig. 5

Fig. 6

Fig. 7

Fig. 8

Fig. 9

Fig. 10

Fig. 11

Fig. 12

Fig. 13

Fig. 14

Fig. 15

Fig. 16

Fig. 17

Fig. 18

Fig. 19

Fig. 20

Fig. 21

Fig. 22

Fig. 23

Fig. 24

**RÉFÉRENCES CITÉES DANS LA DESCRIPTION**

**Documents brevets cités dans la description**

- EP 0087743 A2

- EP 0086393 A